(19) Europäisches Patentamt
European Patent Office
Office européen des brevets

(11) EP 1 760 093 B1

(12) **EUROPÄISCHE PATENTSCHRIFT**

(45) Veröffentlichungstag und Bekanntmachung des Hinweises auf die Patenterteilung:
**21.12.2011 Patentblatt 2011/51**

(51) Int Cl.:
***C08C 19/08*** *(2006.01)* ***C08C 19/02*** *(2006.01)*

(21) Anmeldenummer: **06017612.0**

(22) Anmeldetag: **24.08.2006**

(54) **Verwendung von Katalysatoren für den Metatheseabbau von Nitrilkautschuk**

Use of catalysts for the metathesis degradation of nitrile rubber

Utilisation de catalyseurs pour la dégradation de caoutchouc nitrile par métathèse

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.08.2005 DE 102005040939**
**09.12.2005 DE 102005058834**
**08.10.2005 DE 102005048327**

(43) Veröffentlichungstag der Anmeldung:
**07.03.2007 Patentblatt 2007/10**

(73) Patentinhaber: **LANXESS Deutschland GmbH**
**51369 Leverkusen (DE)**

(72) Erfinder:
- **Obrecht, Werner, Prof. Dr.**
**47447 Moers (DE)**
- **Müller, Julia Maria**
**89134 Blaustein (DE)**
- **Nuyken, Oskar, Prof. Dr.**
**81927 München (DE)**
- **Berke, Heinz, Prof. Dr.**
**8268 Salenstein (CH)**
- **Meca, Ludek, Dr.**
**8037 Zürich (CH)**
- **Triscikova, Lubica, Dr.**
**8051 Zürich (CH)**

(56) Entgegenhaltungen:
**CA-A1- 2 357 470 US-A1- 2004 236 029**

- **PATRICIO E. ROMERO, WARREN E. PIERS, AND ROBERT MCDONALD: "Rapidly Initiating Ruthenium Olefin-Metathesis Catalysts" ANGEW. CHEM. INT. ED., Bd. 2004, Nr. 43, 19. November 2004 (2004-11-19), Seiten 6161-6165, XP002546698**
- **HANS-GEORG ELIAS: "Makromoleküle, 6. Auflage" 1999, WILEY-VCH , WEINHEIM , XP002546699 Kapitel 9.4.5, S. 294**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 760 093 B1

Printed by Jouve, 75001 PARIS (FR)

## Beschreibung

Die vorliegende Erfindung betrifft ein neues Verfahren zum Metathese-Abbau von Nitrilkautschuk unter Einsatz von Ruthenium- oder Osmium-basierten Katalysatoren.

Hydrierter Nitrilkautschuk, abgekürzt auch als "HNBR" bezeichnet, wird durch Hydrierung von Nitrilkautschuk, abgekürzt auch als "NBR" bezeichnet, hergestellt.

Unter Nitrilkautschuk werden Kautschuke verstanden, bei denen es sich um Copolymere aus mindestens einem ungesättigten Nitril und mindestens einem konjugierten Dien und möglicherweise weiteren Comonomeren handelt.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus.

Am Markt kommerziell erhältliche HNBR Typen weisen üblicherweise eine Mooney-Viskosität (ML 1+4 @100 ˚C) im Bereich von 55 bis 105 auf, was einem Gewichtsmittel des Molekulargewichts $M_w$, (Bestimmungsmethode: Gelpermeationschromatographie (GPC) gegen Polystyroläquivalente) im Bereich von ca. 200.000 bis 500.000 entspricht. Die dabei zu messenden Polydispersitätsindizes PDI (PDI = $M_w$ /$M_n$, wobei $M_w$ das Gewichtsmittel und $M_n$ das Zahlenmittel des Molekulargewichts darstellt), die eine Aussage über die Breite der Molekulargewichtsverteilung liefern, liegen häufig bei einem Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Dieser Abbau erfolgte beispielsweise über den mechanischen Weg durch sogenannte Mastikation, z. B. auf einem Walzwerk. Prinzipiell möglich ist auch der chemische Abbau durch Umsetzung mit starken Säuren. Dieser chemische Abbau hat jedoch den Nachteil, dass funktionelle Gruppen wie Carbonsäure- und Ester-Gruppen in das Molekül eingebaut werden und zusätzlich die Mikrostrukur des Polymers substanziell geändert wird. All diese Änderungen bringen Nachteile für die Anwendungen mit sich.

Die Herstellung von HNBR mit niedrigen Molmassen, entsprechend einer Mooney Viskosität (ML 1+4 bei 100˚C) in einem Bereich kleiner 55 bzw. einem Zahlenmittel des Molekulargewichts von $M_n$ < 200.000 g /mol, ist mittels etablierter Herstellungsverfahren nicht möglich, da einerseits bei der Hydrierung von NBR ein sprunghafter Anstieg der Mooney Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooneyviskosität eines NBR-feedstocks, die ohne Schwierigkeiten in einer etablierten großtechnischen Anlage aufarbeitbar ist, liegt bei ca. 30 Mooney-Einheiten (ML 1+4 bei 100˚C). Die Mooney-Viskosität des hydrierten Nitrilkautschuks, der mit einem solchen NBR-Feedstock erhalten wird, liegt in der Größenordnung von 55 Mooneyeinheiten (ML1+4 bei 100˚C).

Im bekannten Stand der Technik wird dieses Problem gelöst, indem man das Molekulargewicht des Nitrilkautschuks vor der Hydrierung durch Abbau auf Mooneywerte (ML 1+4 bei 100˚C) von weniger als 30 Mooney-Einheiten bzw. ein Zahlenmittel des Molekulargewichts von $M_n$ < 70.000 g / mol reduziert. Den Abbau des Molekulargewichts erreicht man hierbei durch Metathese, wobei üblicherweise bei dieser Metathesereaktion niedermolekulare 1-Olefine zugesetzt werden. Die Metathesereaktion wird zweckmäßigerweise im gleichen Lösungsmittel wie die Hydrierreaktion (in situ) durchgeführt, damit man den abgebauten NBR-Feedstock nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

Beschrieben wird diese Herstellung von HNBR mit niedrigen Mooney-Werten beispielsweise in der WO-A-02/100941 sowie der WO-A-02/100905**.** In der WO-A-02/100905 wird ein Verfahren beschrieben, welches den Abbau von Nitrilkautschuk-Ausgangspolymeren durch Olefinmetathese und eine anschließende Hydrierung umfasst. Hierbei wird ein Nitrilkautschuk in einem ersten Schritt in Gegenwart eines Co-Olefins und eines speziellen Komplexkatalysators auf Osmium-, Ruthenium-, Molydän- oder Wolfram-Basis umgesetzt und in einem zweiten Schritt hydriert. Erhältlich sind gemäß WO-A-02/100941 auf diesem Weg hydrierte Nitrilkautschuke mit einem Gewichtsmittel des Molekulargewichts (Mw) im Bereich von 30.000 bis 250.000, einer Mooney-Viskosität (ML 1+4 @100˚C) im Bereich von 3 bis 50 und einem Polydispersitätsindex PDI von kleiner 2.5.

Metathesekatalysatoren sind unter anderem bekannt aus WO-A-96/04289 und WO-A- 97/06185**.** Sie besitzen die folgende prinzipielle Struktur:

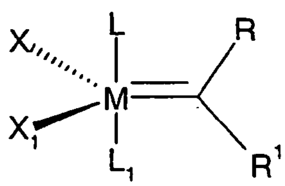

worin M für Osmium oder Ruthenium steht, R und $R^1$ organische Reste mit großer struktureller Variationsbreite darstellen, X und $X_1$ anionische Liganden sind und L sowie $L_1$ neutrale Elektronen-Donoren darstellen.

Derartige Katalysatoren sind geeignet für Ringschlussmetathesen (RCM), Kreuzmetathesen (CM) und Ringöffnungsmetathesen (ROMP). Für die Durchführung des Abbaus von Nitrilkautschuk sind die genannten Katalysatoren aber nicht zwangsläufig geeignet.

Mit einigen Katalysatoren aus der Gruppe der "Grubbs (I) Katalysatoren" gelingt die Durchführung der Metathese von Nitrilkautschuk. Geeignet ist z.B. ein Ruthenium-Katalysator mit bestimmten Substituentenmustern, wie z.B. der nachfolgend dargestellte Katalysator Bis(tricyclohexylphosphin) benzyliden-rutheniumdichlorid.

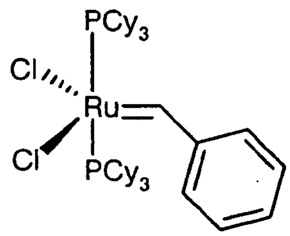

**Grubbs (I) Katalysator**

Nach der Hydrierung weisen die Kautschuke ein sehr niedrigeres Molekulargewicht sowie eine enge Molekulargewichtsverteilung auf (WO-A-02/100941, WO-A-03/002613).

Aus US 2004/0110888 A1 sind auch Vulkanisate auf Basis dieser niedermolekularen HNBR-Kautschuke bekannt.

**US 2004/0127647 A1** beschreibt Blends auf der Basis niedermolekularer HNBR-Kautschuke mit bi- bzw. multimodaler Molekulargewichtsverteilung sowie Vulkanisate dieser Kautschuke.

Aus der **US-A-2004/0236029** ist ein Verfahren zur Herstellung von Nitrilkautschuken mit niedrigen Molekulargewichten offenbart, worin Nitrilkautschuke einer Metathesereaktion in Gegenwart verschiedener Katalysatoren unterworfen werden. Gemäß den Beispielen wird Bis(tricyclohexylphosphin)benzyliden-rutheniumdichlorid (Grubbs (I)-Katalysator) als Katalysator eingesetzt und die Metathese bei 80°C durchgeführt.

Aus **WO-A-00/71554** ist ferner eine Gruppe von Katalysatoren bekannt, die in der Fachwelt als "Grubbs (II) Katalysatoren" bezeichnet werden. Verwendet man einen solchen "Grubbs(II) Katalysator" wie z.B. 1,3-bis(2,4,6-trimethylphenyl)-2-imidazolidenyliden)(tricyclohexylphosphin)-ruthenium(phenylmethylen)dichlorid für die NBR-Metathese, gelingt diese sogar ohne Verwendung eines Co-Olefins. Nach der anschließenden Hydrierung, die in-situ durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs (**US-A-2004/0132891**).

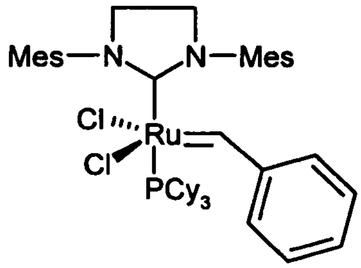

Grubbs (II) Katalysator

Die Verwendung der mit Grubbs-(II)-Katalysator abgebauten Nitrilkautschuke für Klebstoffzusammensetzungen sind beispielsweise in der **US 2004/0132906-A1** beschrieben.

Die genannten Verfahren zum Metatheseabbau von Nitrilkautschuk und die hierfür verwendeten Katalysatoren haben den Nachteil, dass Lösungen dieser Katalysatoren, insbesondere in Gegenwart von Luftsauerstoff, instabil sind und immer frisch angesetzt werden müssen.

Bekannt sind darüber hinaus in der Fachwelt Katalysatoren, die nachfolgend als Piers-(I)-Katalysatoren bezeichnet werden und nachfolgende Struktur besitzen (siehe z.B. **Angew. Chem. Int. Ed. 2004,43, 6161-6165**):

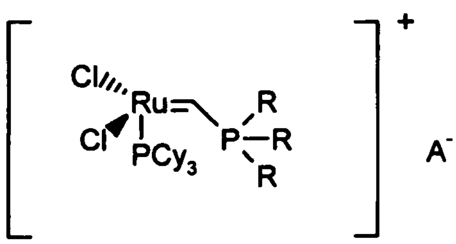

Piers (I) Katalysator

wobei R beispielsweise für iso-Propyl- oder Cyclohexyl-Reste steht und A ein Anion ist.

Aus eigenen Untersuchungen ergab sich jedoch, dass derartige Piers (I) Katalysatoren bei der NBR-Metathese nicht zu einem Abbau des Nitrilkautschuks führen, sondern ausschließlich zu einer NBR-Vergelung. Hierdurch wird der Nitrilkautschuk unbrauchbar.

In der **WO-A-2005/121158** werden ferner ausgehend vom Piers (I) Katalysator weiterentwickelte Katalysatoren für Metathese-Reaktionen beschrieben.

Ausgehend vom Stand der Technik bestand daher die Aufgabe, ein Verfahren zum Metathese-Abbau von Nitrilkautschuken zur Verfügung zu stellen, welches unter Einsatz eines geeigneten Katalysators erfolgt, ohne dass eine Vergelung beobachtet wird und der Katalysator außerdem eine verbesserte Lagerstabilität in Lösung aufweist.

Überraschenderweise konnte diese Aufgabe gelöst werden durch ein Verfahren zum Metathese-Abbau von Nitrilkautschuk unter Einsatz von Katalysatoren, die einen Imidazolidin-Liganden sowie gleichzeitig einen Carben-Liganden mit einem Phosphin-Rest tragen.

**Gegenstand der Erfindung** ist somit ein Verfahren zum Metathese-Abbau von Nitrilkautschuken, bei dem man den Nitrilkautschuk in Gegenwart eines Katalysators der allgemeinen Formel (I) einer Metathese-Reaktion bei einer Temperatur im Bereich von 50 bis 150°C unterwirft,

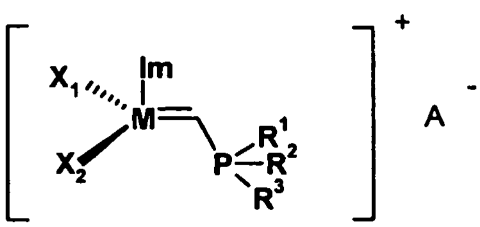

(I)

wobei

| | |
|---|---|
| M | Ruthenium oder Osmium bedeutet, |
| $X^1$ und $X^2$ | gleich oder verschieden sein können und anionische Liganden darstellen, |
| $R^1$, $R^2$ und $R^3$ | gleich oder verschieden sind und organische Reste darstellen, |
| Im | einen gegebenenfalls substituierten Imidazolidinrest darstellt und |
| A | ein Anion darstellt. |

Diese Katalysatoren der allgemeinen Formel (I) mit einem Imidazolidin-Liganden sowie einem Carben-Liganden, der einen Phosphin-Rest aufweist, lassen sich erfolgreich zum Metathese-Abbau einsetzen, d.h. es wird ein Abbau des Nitrilkautschuks erreicht, ohne dass eine Vergelung beobachtet wird. Dies ist umso erstaunlicher, als für die zuvor beschriebenen Piers-(I)-Katalysatoren keine Eignung für den Einsatz zum Metathese-Abbau von Nitrilkautschuken festgestellt werden konnte. Darüber hinaus bilden die erfindungsgemäßen Katalysatoren auch bei gegebenenfalls erhöhten Temperaturen eine stabile Lösung in den typischerweise verwendeten Lösungsmitteln, insbesondere in Chlorbenzol. Eine Verfärbung von Katalysator-Lösungen bei längerem Stehenlassen oder erhöhter Temperatur, welches üblicherweise auf Deaktivierung oder Zersetzung hindeutet, konnte nicht beobachtet werden.

**$X^1$ und $X^2$:**

In den Katalysatoren der allgemeinen Formel (I) können **$X^1$ und $X^2$** gleich oder verschieden und beispielsweise Wasserstoff, Halogen, Pseudohalogen, $C_1$-$C_{20}$-Alkyl, Aryl, $C_1$-$C_{20}$-Alkoxy, Aryloxy, $C_3$-$C_{20}$-Alkyldiketonat, Aryldiketonat, $C_1$-$C_{20}$-Carboxylat, Arylsulfonat, $C_1$-$C_{20}$-Alkylsulfonat, $C_1$-$C_{20}$-Alkylthiol, Arylthiol, $C_1$-$C_{20}$-Alkylsulfonyl oder $C_1$-$C_{20}$-Alkylsulfinyl-Reste darstellen.

Die vorgenannten Reste als Bedeutungen von $X^1$ und $X^2$ können ferner durch ein oder mehrere weitere Reste substituiert sein, beispielsweise durch Halogen, bevorzugt Fluor, $C_1$-$C_{10}$-Alkyl, $C_1$-$C_{10}$-Alkoxy oder Aryl-Reste, wobei auch die letzteren Reste gegebenenfalls wiederum durch ein oder mehrere Substituenten substituiert sein können, die aus der Gruppe umfassend Halogen, bevorzugt Fluor, $C_1$-$C_5$-Alkyl, $C_1$-$C_5$-Alkoxy und Phenyl ausgewählt sind.

In einer bevorzugten Ausführungsform bedeuten X und $X^1$ Halogen, Benzoat, $C_1$-$C_5$-Carboxylat, $C_1$-$C_5$-Alkyl, Phenoxy, $C_1$-$C_5$-Alkoxy, $C_1$-$C_5$-Alkylthiol, Arylthiol, Aryl und $C_1$-$C_5$-Alkylsulfonat, In einer besonders bevorzugten Ausführungsform sind X und $X^1$ beide gleichzeitig Halogen, $CF_3COO$, $CH_3COO$, $CFH_2COO$, $(CH_3)_3CO$, $(CF_3)_2(CH_3)CO$, $(CF_3)(CH_3)_2CO$, PhO, MeO, EtO, Tosylat, Mesylat oder Trifluormethansulfonat. Insbesondere stehen X und $X^1$ gleichzeitig für Chlor.

**$P(R^1R^2R^3)$:**

In den Katalysatoren der allgemeinen Formel (I) sind die Reste $R^1$, $R^2$ und $R^3$ im Rest $P(R^1R^2R^3)$ gleich oder verschieden und können geradkettiges oder verzweigtes $C_1$-$C_{30}$-Alkyl, $C_5$-$C_{30}$-Cylcoalkyl oder Aryl darstellen, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

Als Rest $P(R^1R^2R^3)$ sind für die Katalysatoren der allgemeinen Formel (I) beispielsweise Triphenylphosphin, Tricyclohexylphoshin, Tricyclopentylphosphin, Triisopropyl-phosphin, Tri (o-tolyl)phosphin, Tri (o-xylyl)phosphin und Trimesitylphosphin geeignet.

**Im:**

Der Imidazolidinrest (Im) in der allgemeinen Formel (I) weist üblicherweise eine Struktur der allgemeinen Formeln (IIa) oder (IIb) auf ,

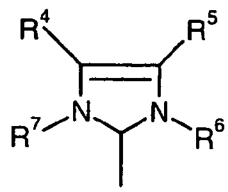

(IIa)

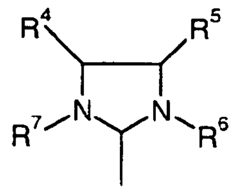

(IIb)

wobei

$R^4$, $R^5$, $R^6$, $R^7$ gleich oder verschieden sein können und Wasserstoff, geradkettiges oder verzweigtes, cyclisches oder acyclisches $C_1$-$C_{20}$-Alkyl, $C_2$-$C_{20}$ Alkenyl, $C_2$-$C_{20}$-Alkinyl, Aryl, $C_1$-$C_{20}$-Carboxylat, $C_1$-$C_{20}$-Alkoxy, $C_2$-$C_{20}$-Alkenyloxy, $C_2$-$C_{20}$-Alkinyloxy, Aryloxy, $C_2$-$C_{20}$-Alkoxycarbonyl, $C_1$-$C_{20}$-Alkylthio, Arylthio, $C_1$-$C_{20}$-Alkylsulfonyl, $C_1$-$C_{20}$-Alkylsulfonat, $C_6$-$C_{20}$-Arylsulfonat und $C_1$-$C_{20}$-Alkylsulfinyl bedeuten.

Gegebenenfalls kann einer oder mehrere der Reste $R^4$, $R^5$, $R^6$, $R^7$ unabhängig voneinander durch einen oder mehrere Substituenten, vorzugsweise geradekettiges oder verzweigtes, cyclisches oder acyclisches $C_1$-$C_{10}$-Alkyl, $C_1$-$C_{10}$-Alkoxy oder Aryl substituiert sein, wobei diese vorgenannten Substituenten wiederum durch ein oder mehrere Reste, vorzugsweise ausgewählt aus der Gruppe Halogen, $C_1$-$C_5$-Alkyl, $C_1$-$C_5$-Alkoxy und Phenyl substituiert sein können.

In einer bevorzugten Ausführungsform werden im erfindungsgemäßen Verfahren Katalysatoren der allgemeinen Formel (I) eingesetzt, bei denen $R^4$ und $R^5$ unabhängig voneinander Wasserstoff, Aryl, besonders bevorzugt Phenyl, geradkettiges oder verzweigtes $C_1$-$C_{10}$-Alkyl, besonders bevorzugt Propyl oder Butyl, bedeuten oder zusammen einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes $C_1$-$C_{10}$-Alkyl, $C_1$-$C_{10}$-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform des erfindungsgemäßen Verfahrens werden Katalysatoren der allgemeinen Formel (I) eingesetzt, bei denen die Reste $R^6$ und $R^7$ gleich oder verschieden sind und geradkettiges oder verzweigtes $C_1$-$C_{10}$-Alkyl, besonders bevorzugt i-Propyl oder Neopentyl, Aryl, besonders bevorzugt Phenyl, $C_1$-$C_{10}$-Alkylsulfonat, besonders bevorzugt Methansulfonat, oder $C_6$-$C_{10}$-Arylsulfonat, besonders bevorzugt p-Toluolsulfonat, bedeuten. Gegebenenfalls sind die vorgenannten Reste als Bedeutungen von $R^6$ und $R^7$ substituiert durch einen oder mehrere weitere Reste ausgewählt aus der Gruppe umfassend geradkettiges oder verzweigtes $C_1$-$C_5$-Alkyl, insbesondere Methyl, $C_1$-$C_5$-Alkoxy, Aryl oder eine funktionelle Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen. Besonders bevorzugt sind die Reste $R^6$ und $R^7$ gleich oder verschieden und bedeuten i-Propyl, Neopentyl oder Adamantyl.

Besonders bevorzugt werden im erfindungsgemäßen Verfahren Katalysatoren der allgemeinen Formel (I) eingesetzt, die Imidazolidinreste (Im) der nachfolgenden Strukturen (IIIa-f) aufweisen:

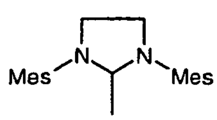

(IIIa)

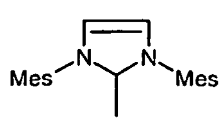

(IIIb)

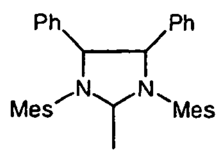

(IIIc)

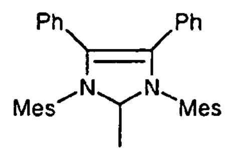

(IIId)

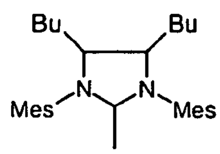

(IIIe)

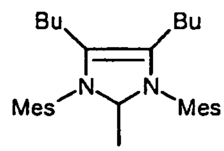

(IIIf)

A:

In der allgemeinen Formel (I) ist A ist ein Anion, bevorzugt aus der Gruppe der Halogenide, der Pseudohalogenide, der Carboxylate, der Sulfonate, der Sulfate, der Phosphonate, der Phosphate, der komplexen Anionen sowie aus der Gruppe der nicht koordinierenden Anionen.

A kann ferner beispielsweise Nitrat, Nitrit, Carbonat, Sulfit, Fluorsulfonat oder Trifluormethansulfonat (Triflat) bedeuten.

Als Halogenid kann A Fluorid, Chlorid, Bromid oder Jodid bedeuten.

Als Pseudohalogenid kann A beispielsweise Cyanid, Rhodanid, Azid, Cyanurat und Thiocyanurat bedeuten.

Als Carboxylat kann A beispielsweise Formiat, Acetat, Sebacat, Versatat, Abietat, Benzoat, Trichloracetat, Trifluoracetat, Maleinat und Salicylat bedeuten.

Als Sulfonat kann A beispielsweise Dodecylsulfonat, Trifluormethylsulfonat, Benzolsulfonat und Naphthalinsulfonat bedeuten.

Als Sulfat kann A beispielsweise Methylsulfat, Propylsulfat und Dodecylsulfat bedeuten.

Als Phosphonat kann A beispielsweise Monoethylphosphonat, Dilaurylphosphonat und Diphenylphosphonat bedeuten.

Als Phosphat kann A beispielsweise Monoethylphosphat, Dilaurylphosphat, Monophenylphosphat und Diphenylphosphat bedeuten.

A kann ferner ein komplexes Anion wie Perchlorat, Tetrafluoroborat, Tetrafluoroaluminat, Hexafluorophosphat, Hexafluoroarsenat, Hexafluoroantimonat oder Hexachloroantimonat darstellen.

A kann auch ein nichtkoordinierendes Anion wie Tetrakis[pentafluorphenyl]borat, Pentakis-[pentafluorphenyl]phosphat, Tetrakis[3,5-trifluormethylphenyl]borat, Pentakis[3,5-trifluormethylphenyl]phosphat, Pentakis[pentafluorphenyl]cyclohexadienylanion oder (Bis(trispentafluorphenyl)bor)cyanid darstellen.

In einer besonders bevorzugten Ausführungsform des erfindungsgemäßen Verfahrens werden Katalysatoren der nachfolgenden Strukturen (IVa-c) eingesetzt:

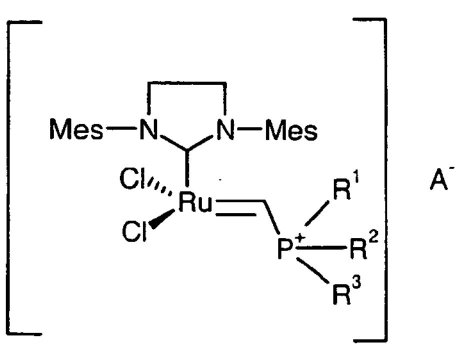

(IVa)

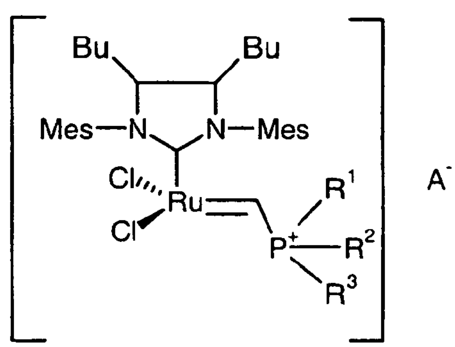

(IVb)

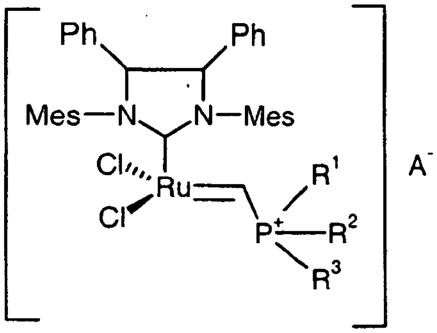

(IVc)

wobei

$R^1$, $R^2$, $R^3$ geradkettiges oder verzweigtes $C_1$-$C_{30}$-Alkyl, $C_5$-$C_{10}$ Cycloalkyl oder Aryl darstellen, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können und

A die für die allgemeine Formel (I) genannten Bedeutungen besitzt.

In einer ganz besonders bevorzugten Ausführungsform des erfindungsgemäßen Verfahrens werden Katalysatoren der allgemeinen Formeln (IVa-c) eingesetzt,
wobei

der Rest $P(R^1R^2R^3)$ Triisopropylphosphin, Triphenylphosphin, Tricyclohexylphoshin, Tricyclopentylphosphin, Tri (o-tolyl)phosphin, Tri (o-xylyl)phosphin oder Trimesitylphosphin bedeutet
und A Bromid, Versatat, Sebacat, Trifluoracetat, Nitrat, Tetrafluoroborat, Tetrakis(3,5-trifluoromethylphenyl)borat, Tetrakis[pentafluorophenyl]borat oder (Bis(trispentafluorphenyl)bor)cyanid darstellt.

In Gegenwart dieser Katalysatoren der allgemeinen Formel (I) kann ein hervorragender Metathese-Abbau von Nitrilkautschuk erfolgen.

**Reaktionsbedingungen der Metathese:**

Im erfindungsgemäßen Verfahren hängt die Menge des für die Metathese eingesetzten Katalysators der allgemeinen Formel (I) von der Natur sowie katalytischen Aktivität des speziellen Katalysators ab. Die Menge an eingesetztem Katalysator, bezogen auf den eingesetzten Nitrilkautschuk, beträgt 5 bis 1.000 ppm Edelmetall, bevorzugt von 10 - 500 ppm, insbesondere von 25- 250 ppm.

Die NBR-Metathese wird üblicherweise in Gegenwart eine Co-Olefins durchgeführt, bei dem es sich bevorzugt um ein geradkettiges oder verzweigtes $C_2$-$C_{16}$-Olefin handelt. Geeignet sind beispielsweise Ethylen, Propylen, Isobuten, Styrol, 1-Hexen oder 1-Octen. Bevorzugt wird 1-Hexen oder 1-Octen verwendet. Sofern dieses Co-Olefin flüssig ist (wie beispielsweise 1-Hexen), liegt die Menge des Co-Olefins bevorzugt in einem Bereich von 0,2-20 Gew.% bezogen auf den eingesetzten NBR. Sofern das Co-Olefin ein Gas ist, wie beispielsweise Ethylen, wird die Menge des Co-Olefins so gewählt, dass sich im Reaktionsgefäß ein Druck im Bereich von $1 \times 10^5$ Pa - $1 \times 10^7$ Pa einstellt, bevorzugt ein Druck im Bereich von $5{,}2 \times 10^5$ Pa bis $4 \times 10^6$ Pa.

Die Metathese-Reaktion kann in einem geeigneten Lösungsmittel durchgeführt werden, welches den eingesetzten Katalyator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration

des NBR in der Reaktionsmischung im Bereich von 1 bis 20 Gew.%, besonders bevorzugt im Bereich von 5 bis 15 Gew. %, bezogen auf die gesamte Reaktionsmischung.

Der Metathese Abbau wird üblicherweise bei einer Temperatur im Bereich von 20 ˚C bis 150˚C durchgeführt, bevorzugt im Bereich von 30 bis 100 ˚C, insbesondere im Bereich von 50 bis 90 ˚C.

Die Reaktionszeit hängt von einer Reihe von Faktoren ab, beispielweise vom Typ des NBR, der Art des Katalysators, der verwendeten Katalysator-Konzentration und der Reaktionstemperatur. Typischerweise ist die Reaktion innerhalb von drei Stunden unter normalen Bedingungen beendet. Der Fortschritt der Metathese kann durch Standard-Analytik überwacht werden, z.B. durch GPC oder Bestimmung der Viskosität.

## Nitrilkautschuke:

Als Nitrilkautschuke ("NBR") können in der erfindungsgemäßen Metathese-Reaktion Polymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden ($C_4$-$C_6$) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind ($C_3$-$C_5$)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Daneben können noch weitere dem Fachmann bekannte Monomere eingesetzt werden wie z.B. α,β-ungesättigte Carbonsäuren oder deren Ester. Bevorzugt sind dabei Fumarsäure, Maleinsäure, Acrylsäure, Methacrylsäure und Itaconsäure als Säuren und deren Ester Butylacrylat, Butylmethacrylat, Ethylhexylacrylat und Ethylhexylmethacrylat. Andere Monomere, die eingesetzt werden können, sind ungesättigte Dicarbonsäuren oder Derivate davon, wie Ester oder Amide, beispielsweise Maleinsäurediethylester, Maleinsäuremonoethylester und Maleinimid. Bevorzugt sind Methacrylsäure, Fumarsäure, Butylacrylat und 2-Ethylhexylacrylat.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.% und bevorzugt im Bereich von 65 bis 75 Gew. %, bezogen auf das Gesamtpolymer. Der Anteil des oder der Summe der α,β-ungesättigten Nitrile liegt üblicherweise bei 10,0 bis 60 Gew.-%, bevorzugt bei 25 bis 35 Gew.-%, bezogen auf das Gesamtpolymer. Die zusätzlichen Monomere können in Mengen von 0,1 bis 40 Gew.%, bevorzugt 1 bis 30 Gew.-%, bezogen auf das Gesamtpolymer, vorliegen. Ist dies der Fall, so verringern sich die Anteile der α,β-ungesättigten Nitrile sowie der konjugierten Diene entsprechend und die Anteile aller Monomere summieren sich jeweils zu 100 Gew.% auf.

Die Herstellung der Nitrilkautschuke durch Polymerisation der vorgenannten Monomere ist dem Fachmann hinlänglich bekannt und in der Literatur (z.B. Houben-Weyl, Methoden der Organischen Chemie Bd.14/1, Georg Thieme Verlag Stuttgart 1961) umfangreich beschrieben.

Die zur Metathese eingesetzten Nitrilkautschuke besitzen eine Mooney-Viskosität (ML 1+4 @100˚C) im Bereich von 30 bis 70, bevorzugt von 30 bis 50. Dies entspricht einem Gewichtsmittel des Molekulargewicht $M_w$ im Bereich von 200.000 - 500.000; bevorzugt im Bereich von 200.000 - 400.000. Die eingesetzten Nitrilkautschuke besitzen ferner eine Polydispersität PDI = $M_w/M_n$, wobei $M_n$ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

## Abgebaute Nitrilkautschuke:

Die durch das erfindungsgemäße Metathese-Verfahren erhaltenen Nitrilkautschuke besitzen eine Mooney-Viskosität (ML 1+4 @100˚C) im Bereich von 5 - 30, bevorzugt von 5 - 20. Dies entspricht einem Gewichtsmittel des Molekulargewicht $M_w$ im Bereich von 10.000- 200.000, bevorzugt im Bereich von 10.000-150.000. Die erhaltenen Nitrilkautschuke besitzen ferner eine Polydispersität PDI = $M_w/M_n$, wobei $M_n$ das Zahlenmittel des Molekulargewichts darstellt, im Bereich 1,5 - 4,0 bevorzugt im Bereich von 1,7 - 3.

## Hydrierung:

An das erfindungsgemäße Verfahren des Metathese-Abbaus kann sich eine Hydrierung der erhaltenen abgebauten Nitrilkautschuke anschließen. Diese kann in der dem Fachmann bekannten Art und Weise erfolgen.

Es ist möglich, die Hydrierung unter Einsatz homogener oder heterogener Hydrierkatalysatoren durchzuführen.

Es ist ferner möglich, die Hydrierung in-situ durchzuführen, d.h. in dem gleichen Reaktionsgefäß, in dem zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Geeignet ist beispielsweise die Umsetzung mit Wasserstoff unter Einsatz homogener Katalysatoren, wie z.B. dem als "Wilkinson"-Katalysator ($(PPh_3)_3RhCl$) bekannten sowie Tetrakis(triphenylphosphin)-rhodium-hydrid oder anderen.

Verfahren zur Hydrierung von Nitrilkautschuk sind bekannt. Rhodium, Ruthenium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe **z.B.**US-A-3,700,637**,** DE-A-2 539 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt

Die selektive Hydrierung kann beispielsweise in Gegenwart eines Rhodium-oder Ruthemiumhaltigen Katalysators erreicht werden. Einsetzbar ist beispielsweise ein Katalysator der allgemeinen Formel

$$(R^1{}_mB)_l\,M\,X_n$$

worin M Ruthenium oder Rhodium ist, $R^1$ gleich oder verschieden sind und eine $C_1$-$C_8$ Alkylgruppe, eine $C_4$-$C_8$ Cycloalkylgruppe, eine $C_6$-$C_{15}$ Aryl-Gruppe oder eine $C_7$-$C_{15}$ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris (triphenylphosphin)-rhodium(I)-chlorid, Tris(triphenylphosphin)-rhodium(III)-chlorid und Tris(dimethylsulfoxid)-rhodium (III)-chlorid sowie Tetrakis(triphenylphosphin)-rhodium-hydrid der Formel $((C_6H_5)_3P)_4RhH$ und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel $R^1{}_mB$ ist, wobei $R^1$, m und B die zuvor genannten Bedeutungen besitzen. Bevorzugt ist m gleich 3, B gleich Phosphor und die Reste $R^1$ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, oder Dicycloalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt ist ferner das Gewichtsverhältnis des Rhodium-haltigen Katalysators zum Co-Katalysator im Bereich von 1:3 bis 1:55, bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei 100 - 150 ˚C und einem Druck von 50 - 150 bar für 2 - 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium geträgert z. B. auf Kohle, Kieselsäure, Calciumxoid, Bariumsulfat etc.

Nach Abschluss der Hydrierung erhält man einen hydrierten Nitrilkautschuk mit einer Mooney-Viskosität (ML 1+4 @100˚C), gemessen gemäß ASTM Norm D 1646, im Bereich von 10 - 50, bevorzugt von 10 - 30. Dies entspricht einem Gewichtsmittel des Molekulargewicht $M_w$ im Bereich von 20.000 - 400.000 g/mol, bevorzugt im Bereich von 20.000 - 200.000. Die erhaltenen hydriereten Nitrilkautschuke besitzen ferner eine Polydispersität PDI= $M_w/M_n$, wobei $M_n$ das Zahlenmittel des Molekulargewichts darstellt, im Bereich von 1- 5 und bevorzugt im Bereich von 1,5-3.

**BEISPIELE**

**I Synthese von erfindungsgemäßen Katalysatoren**

- [Dichloro(1,3-dimesityldihydroimidazolyliden)(tricyclohexylphosphoniocarben) ruthenium] tetrafluoroborat (2) **in B2;**
- [Dichloro(1,3-dimesityldihydroimidazolyliden)(tricyclohexylphosphoniocarben) ruthenium] [tetrakis(3,5-trifluoromethylphenyl)borat] (3) **in B3**
- [Dichloro(4,5-dibutyl-1,3-dimesityldihydroimidazolyliden)(tricyclohexylphosphonio carben)ruthenium] tetrafluoroborat (6) **in B8**

**B1 Carbido(dichloro)-1,3-dimesityldihydroimidazolyliden(tricyclohexylphosphin) ruthenium (1)**

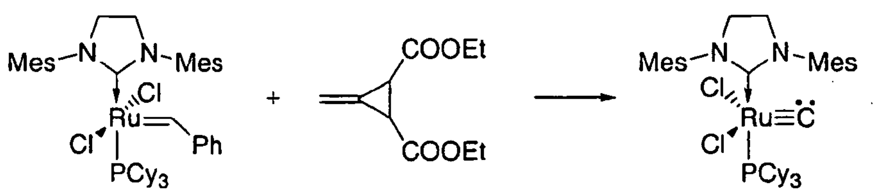

(1)

In ein 25 ml Schlenkgefäss wurden (1,3-Dimesityldihydroimidazolyliden)($PCy_3$)$Cl_2$Ru=CHPh (0.42 g; 0.5 mmol) und *trans*-3-Methylen-1,2-cyclopropandicarbonsäurediethylester (0.10 g; 0.5 mmol) vorgelegt. Unter Stickstoff als Schutzgas wurde trockenes $CH_2Cl_2$ (5 ml) dazugegeben und die rot-braune Lösung 12 Stunden gerührt. Danach wurde das Lösungsmittel der resultierenden orange-braunen Lösung im Hochvakuum abgezogen. Unter Stickstoff wurde der braune Rückstand in Hexan (2 ml) aufgenommen, 1 Stunde gerührt und dann filtriert. Zweimaliges Waschen des Rückstandes mit Hexan ergab Carbido(dichloro)-1,3-dimesityldihydroimidazolyliden(tricyclohexylphosphin)ruthenium (1) als hellbraunen Festkörper (0.23 g; 60 %).

**$^1$H NMR (300 MHz, $CDCl_3$):** δ 6.95 (s, 2H), 6.89 (s, 2H), 4.07 (m, 4H), 2.53 (s, 6H), 2.49 (s, 6H), 2.31 (breit s, 3H), 2.29 (s, 3H), 2.24 (s, 3H), 1.88, 1.62, 1.13 (alle m, 30 H).
**$^{31}$P NMR (121 MHz, $CDCl_3$):** δ 34.7 (s).

**B2 [Dichloro(1,3-dimesityldihydroimidazolyliden)(trieyclohexylphosphoniocarben) ruthenium] tetrafluoroborat (2)**

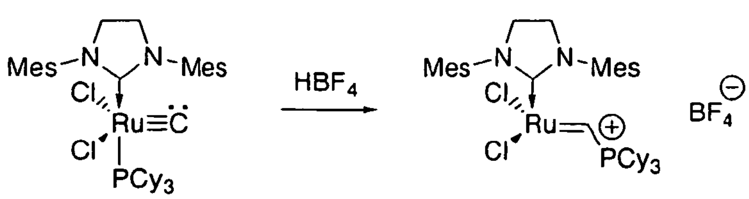


(1) (2)

Sämtliche Glasgeräte wurden in einem Ofen bei 160 ˚C getrocknet.

In einem 25 ml Schlenkgefäss wurde Verbindung (1) aus Beispiel B1 (0.15 g; 0.195 mmol) unter Stickstoff als Schutzgas vorgelegt. Dazu wurden im Vakuum 10 ml trockenes $CH_2Cl_2$ einkondensiert und danach die Reaktionsmischung auf Raumtemperatur aufgewärmt. [$H(Et_2O)_2$]$BF_4$ (0.027 ml; 0.195 mmol) wurde mit einer Spritze zugegeben, worauf die Farbe der Lösung nach grün-braun umschlug. Es wurde 2 Stunden gerührt und danach das Lösungsmittel im Ölpumpenvakuum abgezogen. Der ölige Rückstand wurde 1 Stunde lang unter Stickstoff mit 2 ml Hexan extrahiert

und filtriert. Nach weiterem zweimaligen Waschen mit Hexan wurde [Dichloro(1,3-dimesityldihydroimidazolyliden)(tricyclohexylphosphoniocarben)ruthenium] tetrafluoroborat (2) als grün-brauner mikrokristalliner Festkörper erhalten (0.15 g; 90 %).

**$^1$H NMR (300 MHz, $CD_2Cl_2$):** δ 17.86 (d, *J* = 36 Hz, 1H), 7.11 (s, 4H), 4.21 (s, 4H), 2.40 (s, 6H), 2.38 (s, 12H), 2.34 (breit s, 3H), 1.82, 1.25 (alle m, 30 H).

**$^{31}$P NMR (121 MHz, $CDCl_3$):** δ 54.4.

**$^{13}$C NMR (125 MHz, $CD_2Cl_2$):** δ 262.8 (Ru=CH-), 188.5 (N-C-N), 141.4 ($C_{Mes}$), 138.3 ($C_{Mes}$), 135.0 ($C_{Mes}$), 130.6 ($C_{Mes}$H), 53.1 (N-$CH_2$), 30.7 (d, $J_{C-P}$= 37 Hz), 28.2, 26.5 (d, $J_{C-P}$ = 12 Hz), 25.3 (all $PCy_3$), 21.3 (*para*-$CH_3$), 19.1 (*ortho*-$CH_3$).

**<u>B3 [Dichloro(1,3-dimesityldihydroimidazolyliden)(tricyclohexylphosnhoniocarben) ruthenium] [tetrakis (3,5-tritluoromethylnhenyl)borat] (3)</u>**

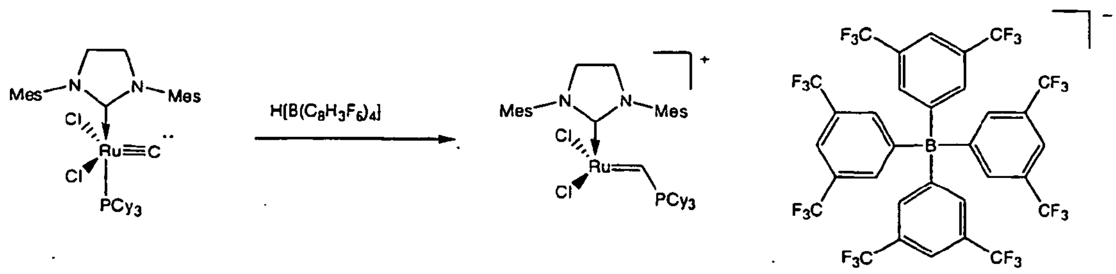


(1) (3)

Sämtliche Glasgeräte wurden in einem Ofen bei 160 ˚C getrocknet.

In einem 25 ml Schlenkgefäss wurde Verbindung 1 aus Beispiel B1 (0.231 g; 0.3 mmol) und $[H(Et_2O)_2][B[3,5-(CF_3)_2C_6H_3]_4]$ (0.304 ml; 0.3 mmol) vorgelegt. Im Vakuum wurde trockenes $CH_2Cl_2$ (15 ml) einkondensiert und die Mischung danach auf Raumtemperatur aufgewärmt. Nach 2-stündigem Rühren wurde das Lösungsmittel im Ölpumpenvakuum abgezogen. Das verbleibende Öl wurde unter Stickstoff für 1 Stunde mit Hexan ausgezogen und das überstehende Lösungsmittel dekantiert. Das Waschen mit Hexan wurde einmal wiederholt. Es wurde [Dichloro(1,3-dimesityldihydroimidazolyliden)(tricyclohexylphosphoniocarben)ruthenium] [tetrakis(3,5-trifluoromethyl phenyl)borat] (3) als grünlich-brauner Festkörper erhalten (0.46 g; 94 %).

**$^1$H NMR (300 MHz, $CD_2Cl_2$):** δ 18.08 (d, J = 38 Hz, 1H), 7.72 (m, 8H), 7.56 (s, 4H), 7.07 (s, 4H), 4.15 (s, 4H), 2.37 (s, 18H), 2.33 (breit s, 3H), 1.80, 1.24 (alle m, 30 H).

**$^{31}$P NMR (121 MHz, $CDCl_3$):** δ53.6.

**$^{13}$C NMR (125 MHz, $CD_2Cl_2$):** δ 261.6 (Ru=CH-), 188.5 (N-C-N), 162.1 (1:1:1:1 q, $J_{C-B}$ = 50 Hz, $C_{Ph}$-B), 140.8 ($C_{Mes}$), 138.3 ($C_{Mes}$), 135.1 (*ortho*-$C_{Ph}$H), 134.9 ($C_{Mes}$), 130.8 ($C_{Mes}$H), 129.2 (q, $J_{C-F}$ = 32 Hz, C-$CF_3$), 124.9 (q, $J_{C-F}$ = 272 Hz, $CF_3$), 117.8 (*para*-$C_{Ph}$H), 53.4 (N-$CH_2$), 30.6 (d, $J_{C-P}$= 38 Hz), 28.2, 26.5 (d, $J_{C-P}$= 11 Hz), 25.2 (alle $PCy_3$), 21.3 (*para*-$CH_3$), 19.1 (*ortho*-$CH_3$).

**Theoretische Gehalte für $C_{72}H_{72}BCl_2F_{24}N_2PRu$:** C: 52.89%, H: 4.44%, N: 1.71%

**Analytisch bestimmt:** C: 52.92%, H: 4.35%, N: 1.73%.

**MS:** *m/z* (%) 770 (1), 733 (2), 304 (43), 214 (100), 198 (59), 133 (77), 117 (55), 83 (51), 55 (62).

**<u>B4: d1-N,N'-Dimesityldecan-5,6-diamin</u>**

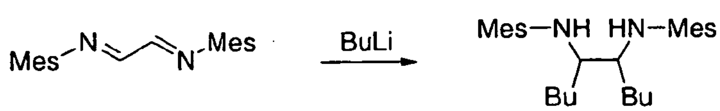

In einem 150 ml Schlenkgefäss wurde N,N'-Dimesitylethandiimin (2.92 g; 10 mmol) unter Stickstoff als Schutzgas in 30 ml THF gelöst und die Lösung auf -78 °C gekühlt. Danach wurde 1.6 M Butyllithium in Hexan (13.8 ml; 22 mmol) langsam zur enthaltenen Suspension bei -78 °C gegeben. Die Reaktionsmischung wurde innerhalb 1 Stunde auf -10 °C aufgewärmt und bei dieser Temperatur eine weitere Stunde gerührt. Danach wurde das Lösungsmittel abgezogen und 15 ml Diethylether und 10 ml Wasser im Eisbad dazugegeben. Die wässrige Schicht wurde mit zweimal 5 ml Ether extrahiert und die vereinten Extrakte über gepulvertem NaOH getrocknet. Nach Abziehen des Lösungsmittels hinterbleibt ein orangenes Öl. Das Rohprodukt wurde auf einer Kieselgelsäule (50 g) chromatographiert und mit Petrolether/Toluol (1:1) eluiert. Nach Abziehen des Lösungsmittels ergaben sich gelbe Kristalle des dl-N,N'-Dimesityldecan-5,6-diamins (2.67 g; 65 %).

**$^1$H NMR (300 MHz, $CDCl_3$):** δ 6.74 (s, 4H), 3.12 (breit s, 2H), 2.98 (breit s, 2H), 2.22 (s, 6H), 2.05 (s, 12H), 1.74 (m, 2H), 1.49 (m, 2H), 1.30 (m, 8H), 0.89 (t, J = 6.8 Hz, 6H).
**$^{13}$C NMR (75 MHz, $CDCl_3$):** δ 141.9, 130.2, 129.6, 128.8, 58.0, 31.1, 29.5, 23.1, 20.5, 18.8, 14.1.

**Theoretische Gehalte für $C_{28}H_{44}N_2$:** C: 82.29%, H: 10.85%, N: 6.85%
**Analytisch bestimmt:** C: 82.20%, H: 10.66%, N: 6.91%
**MS:** *m/z* (%): 408 (1), 333 (3), 204 (100), 146 (85), 44 (92)

**B5: [trans-4,5-Dibutyl-1,3-dimesityl-4,5-dihydroimidazolium] tetrafluoroborat**

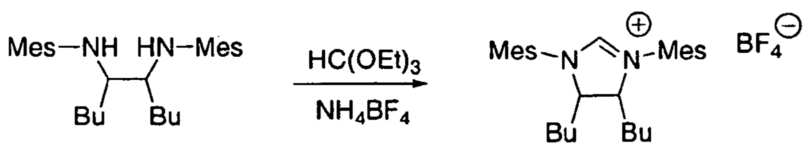


In einem 25 ml Rundkolben wurde dl-N,N'-Dimesityldecan-5,6-diamin aus Beispiel B3 (0.817 g; 2 mmol), $NH_4BF_4$ (0.21 g; 2 mmol) und Triethyl-orthoformiat (0.42 ml; 2.5 mmol) gegeben. Die Reaktionsmischung wurde für 4 Stunden auf 130 °C unter einem ständigen Stickstoffstrom erhitzt. Das Abziehen des Lösungsmittels ergab ein braunes Öl, welches mit 2 ml Diethylether 1 Stunde gerührt wurde. Der Diethylether wurde abdekantiert und der Waschvorgang mit Diethylether zweimal wiederholt. Es ergaben sich dunkle Kristalle als Rohprodukt, welche einer Säulenchromatographie auf Kieselgel (15 g) unterworfen wurden. Nach Elution mit Essigsäuremethylester und Abziehen des Lösungsmittels erhielt man das Dihydroimidazoliumsalz als hellbraunes Pulver (0.72 g; 71 %).

**$^1$H NMR (300 MHz, $CDCl_3$):** δ 8.50 (s, 1H), 7.00 (s, 2H), 6.98 (s, 2H), 4.20 (breit s, 2H), 2.35 (s, 6H), 2.33 (s, 6H), 2.31 (s, 6H), 1.80 (m, 4H), 1.31 (m, 8H), 1.14 (m, 2H), 0.86 (t, J = 6.9 Hz, 6H).
**$^{13}$C NMR (75 MHz, $CDCl_3$):** δ 158.4, 140.4, 135.7, 134.4, 130.4, 128.9, 69.4, 32.9, 27.2, 22.3, 21.1, 18.4, 18.1, 13.7.
**MS:** *m/z* (%):419 (22), 361 (100), 305 (12), 280 (10), 146 (11), 135 (32), 57 (11).

**B6: Dichloro(trans-4,5-dibutyl-1,3-dimesityldihydroimidazolyliden)(tricyclohexyl phosphin)(phenylcarben) ruthenium (4)**

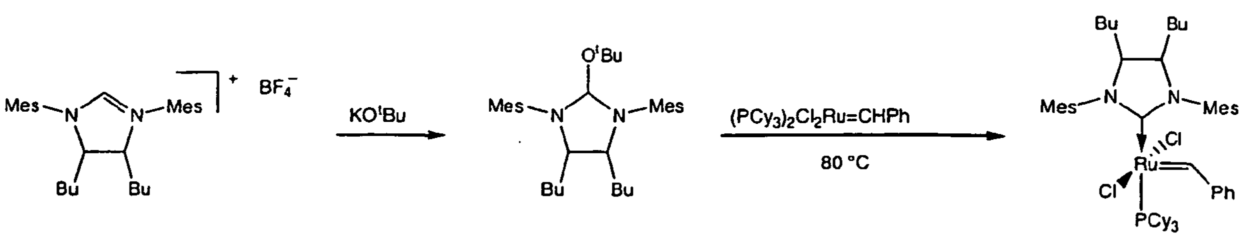


(4)

Eine Lösung von KO$^t$Bu (0.133 g; 1.181 mmol) in 20 ml THF wurde in einer Glovebox zubereitet und aus der

Box genommen. Das [trans-4,5-Dibutyl-1,3-dimesityl-4,5-dihydroimidazolium] tetrafluoroborat aus Beispiel B4 (0.57 g; 1.125 mmol) wurde in 10 ml THF unter Stickstoff als Schutzgas gelöst und in ein 150 ml Schlenkgefäss gegeben. Die $KO^tBu$-Lösung wurde bei Raumtemperatur mit der braunen Lösung des [trans-4,5-Dibutyl-1,3-dimesityl-4,5-dihydroimidazolium] tetrafluoroborats vereint. Die trübe, gelb-orange Lösung wurde 1 Stunde gerührt; danach wurde eine Lösung von $(PCy_3)_2Cl_2Ru$=CHPh (0.741 g; 0.9 mmol) in 40 ml Benzol mit einer Spritze zugegeben. Die Reaktionsmischung wurde 1.5 Stunden auf 80 ˚C erhitzt und das Lösungsmittel anschliessend abgezogen. Der Rückstand wurde über eine Kieselgelsäule (10 g) chromatographiert und das Rohprodukt mit einer Petrolether/Diethylether-Mischung (4:1) als rote Zone eluiert. Das Lösungsmittel wurde abgezogen. Unter Stickstoff wurde das rote Öl bei 0 ˚C für 1 Stunde mit 2 ml Hexan ausgezogen und danach abfiltriert. Nach zweimaligem Waschen des Rückstandes mit Hexan wurde Dichloro (trans-4,5-dibutyldihydroimidazolyliden)(tricyclohexylphosphin)(phenylcarben) ruthenium (4) als rosa Festkörper (0.48 g; 55 %) erhalten.

**$^1$H NMR (300 MHz, $CD_2Cl_2$):** δ 19.14 (d, J = 132 Hz, 1H), 8.96 (breit s, 1H), 7.36 (breit s, 1H), 7.23-6.52 (m, 6H), 5.96, 5.71 (zwei breit s, 1H), 3.79 (breit s, 2H), 2.90-0.65 (m, 51H).
**$^{31}$P NMR (121 MHz, $CD_2Cl_2$):** δ 27.6 (s).
**$^{13}$C NMR (75 MHz, $CD_2Cl_2$):** δ 295.0, 221.7, 220.7, 151.8, 140.5, 139.4 (breit), 138.6, 137.8, 137.4, 135.4 (breit), 132.4 (breit), 130.8, 130.5, 129.8, 128.0 (breit), 71.7, 70.6, 69.3, 34.9, 34.5 (breit), 32.0 (breit), 29.7 (breit), 28.8, 28.6, 28.5, 28.4, 26.8, 23.6, 23.4, 22.5, 21.5, 21.3, 20.6, 19.5 (breit), 14.3, 14.2.

**Theoretische Gehalte für $C_{54}H_{81}Cl_2N_2PRu$:** C: 67.48%, H: 8.49%, N: 2.91%
**Analytisch bestimmt:** C: 67.29%, H: 8.30%, N: 2.95%.

**B7: Carbido(dichloro)(trans-4,5-dibutyl-1,3-dimesityldihydroimidazolyliden) (tricyclohexylphosphin)ruthenium (5)**

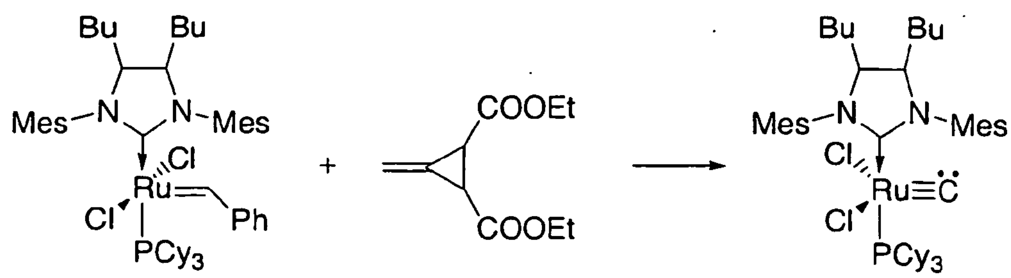

(4) (5)

Dichloro(trans-4,5-dibutyldihydroimidazolyliden)(tricyclohexylphosphin)(phenylcarben)ruthenium aus Beispiel B5 (0.48 g; 0.5 mmol) und *trans*-3-Methylen-1,2-cyclopropandicarbonsäurediethylester (0.10 g; 0.5 mmol) wurden in ein 25 ml Schlenkgefäss gegeben. Unter Stickstoff als Schutzgas wurde 5 ml trockenes $CH_2Cl_2$ hinzugefügt. Die erhaltene rot-braune Lösung wurde für 12 Stunden gerührt. Danach wurde die braune Lösung im Hochvakuum abgezogen. Der ölige Rückstand wurde für 1 Stunde unter Stickstoff mit 2 ml Hexan behandelt. Nach Filtration wurde zweimal mit Hexan gewaschen, wobei Carbido(dichloro)(4,5-dibutyl-1,3-dimesityldihydroimidazolyliden)(tricyclo hexylphosphin)ruthenium (5) als hellbrauner Festkörper erhalten wurde (0.35 g; 79 %).

**$^1$H NMR (300 MHz, $CDCl_3$):** δ 6.90 (*pseudo* t, *J* = 12 Hz, 4H), 3.91 (m, 1H), 3.79 (m, 1H), 2.53 (s, 3H), 2.51 (s, 3H), 2.50 (s, 3H), 2.48 (s, 3H), 2.31 (breit s, 3H), 2.28 (s, 3H), 2.24 (s, 3H), 1.98-1.48, 1.40-0.94 (alle m, 42 H), 0.85 (t, *J* = 6.9 Hz, 3H), 0.83 (t, *J* = 6.9 Hz, 3H).
**$^{31}$P NMR (121 MHz, $CDCl_3$):** δ 34.0 (s).
**$^{13}$C NMR (75 MHz, $CDCl_3$):** δ 480.8, 211.5, 210.3, 139.5, 139.1, 137.5, 137.4, 137.3, 136.8, 134.8, 129.8, 129.7, 129.5, 129.2, 70.5, 69.1, 34.4, 34.0, 31.2, 30.9, 29.2, 29.0, 27.9, 27.8, 27.7, 26.3, 22.7, 22.6, 21.6, 21.1, 20.9, 20.6, 20.2, 19.0, 13.8, 13.7.

**Theoretische Gehalte für $C_{48}H_{75}Cl_2N_2PRu$:** C: 65.29%, H: 8.56%, N: 3.17%
**Analytisch bestimmt:** C: 65.21%, H: 8.48%, N: 3.13%
**MS:** m/z (%) 882 (19), 846 (39), 602 (13), 429 (23), 417 (54), 315 (100), 198 (57), 117 (82), 55 (70).

**B8 [Dichloro(trans-4,5-dibutyl-1,3-dimesityldihydroimidazolyliden)(tricyclohexylphosphoniocarben)]tetrafluoroborat (6)**

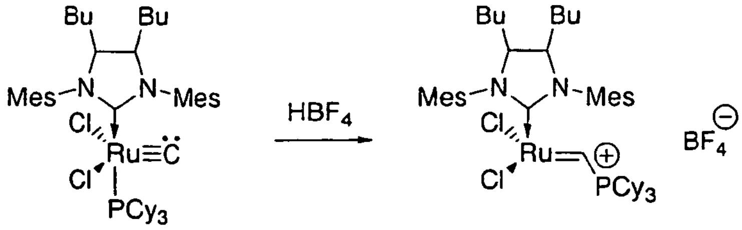


(5) (6)

Sämtliche Glasgeräte wurden in einem Ofen bei 160 °C getrocknet.

In einem 25 ml Schlenkgefäss wurde Carbido(dichloro)(4,5-dibutyl-1,3-dimesityldihydroimidazolyliden)(tricyclohexylphosphin) ruthenium (5) aus Beispiel B6 (0.31 g; 0.35 mmol) vorgelegt und 10 ml trockenes $CH_2Cl_2$ in Vakuum dazu kondensiert und unter Stickstoff die Mischung auf Raumtemperatur aufgewärmt. $[H(Et_2O)_2]BF_4$ (0.048 ml; 0.35 mmol) wurde mit einer Spritze dazugegeben, worauf die Reaktionsmischung grün-schwarz wurde. Nach 2 Stunden Rühren wurde das Lösungsmittel in Ölpumpen Vakuum abgezogen. Der ölige Rückstand wurde unter Stickstoff 1 Stunde lang mit 2 ml Hexan behandelt und danach abfiltriert. Der Waschvorgang wurde einmal wiederholt, wobei Dichloro(trans-4,5-dibutyl-1,3-dimesityldihydroimidazolyliden) (tricyclohexylphosphoniocarben)ruthenium] tetrafluoroborat (6) als dunkelgrüner mikrokristalliner Festkörper anfiel (0,32 g; 94 %).

**$^1$H NMR (300 MHz, $CD_2Cl_2$):** δ 19.83, 19.11, 18.44 (alle s, 1H), 7.66-6.90 (m, 4H), 4.84 (m, 1H), 3.72 (m, 1H), 2.80-2.18, 2.00-0.62 (beide m, 51H).
**$^{31}$P NMR (121 MHz, $CDCl_3$):** δ 34.0 (s).
**$^{13}$C NMR (75 MHz, $CDCl_3$):** δ 194.8, 143.4 (breit), 139.0 (breit), 137.7, 136.8, 135.9, 135.2, 134.9, 134.0, 130.9, 129.8, 128.7, 121.7, 68.1, 66.0 (breit), 32.9, 30.9, 30.3, 28.6, 27.1, 27.0, 26.9, 26.7, 25.8, 23.1, 22.9, 21.6, 20.6, 20.2, 14.2, 14.1.

**Theoretische Gehalte für $C_{48}H_{76}BCl_2F_4N_2PRu$:** C: 59.38%, H: 7.89%, N: 2.89%
**Analytisch bestimmt:** C: 59.01%, H: 7.68%, N: 2.75%

**II Stabilität des Katalysators aus Beispiel B3 [Dichloro(1,3-dimesityldihydroimidazolyliden) (tricyclohexylphosphoniocarben)ruthenium] [tetrakis(3,5-trifluormethylphenyl)borat] (Ruthenium-Verbindung 3 aus Beispiel B3) im Vergleich mit 1,3-bis(2,4,6-trimethylphenyl)-2-imidazolidenyliden)(tricyclohexylphosphin)-Ruthenium (phenylmethylen)dichlorid ("Grubbs-(II)-Katalysator") in Lösung.**

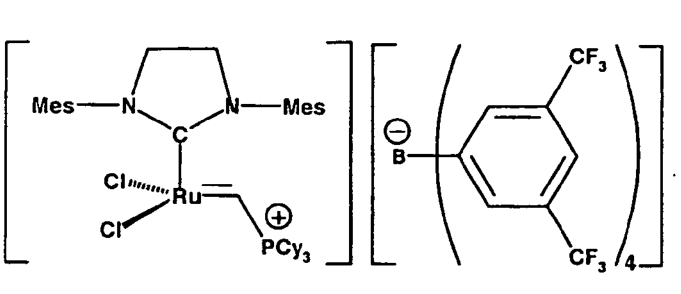

Ruthenium-Verbindung 3 aus Beispiel B3

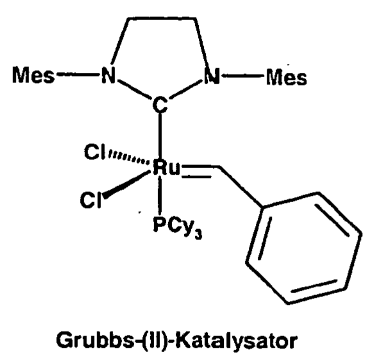

Grubbs-(II)-Katalysator

Die Stabilität der gelösten Katalysatoren wurden mittels NMR in Deuterochloroform ($CDCl_3$) und in Deuterobenzol ($C_6D_6$) bestimmt.

Hierbei wurde [Dichloro(1,3-dimesityldihydroimidazolyliden)(tricyclohexylphosphonio-carben) ruthenium] [tetrakis(3,5-trifluoromethylphenyl)borat] (erfindungsgemäße Ruthenium-Verbindung 3 aus Beispiel B3) mit 1,3-bis(2,4,6-trimethylphenyl)-2-imidazolidenyliden) (tricyclohexylphosphin)-ruthenium(phenylmethylen)dichlorid (Grubbs-(II)-Katalysator) vergleichend untersucht. Der Grubbs-(II)-Katalysator wurde von Materia Inc. (Pasadena California/USA) käuflich erworben. Es wurden jeweils 0,01 molare Lösungen (4,2 mg Grubbs-(II)-Katalysator pro 0,5 ml Lösungsmittel und 8,2 mg Katalysator aus B3 pro 0,5 ml Lösungsmittel) eingesetzt wurden. Die Herstellung der Lösungen erfolgte ohne Schutzgas an der Luft. Mit den Lösungen wurden NMR-Röhrchen befüllt, die bei 24˚C gelagert wurden. In einem zeitlichen Abstand von jeweils 30 min wurden die NMR-Röhrchen an der Luft geöffnet und heftig geschüttelt. Die Konzentrationsbestimmungen wurden stündlich durchgeführt.

In **Deuterochloroform** wurden folgende zeitlichen Abhängigkeiten der relativen Konzentrationen bestimmt:

| **Standzeit [h]** | 0 | 1 | 2 | 3 | 4 |
|---|---|---|---|---|---|
| **Grubbs-(II)-Katalysator (nicht erfindungsgemäß)** | 100 | 93,5 | 82,2 | 71,9 | 62,9 |
| **Katalysator aus Beispiel B3** | 100 | 100 | 100 | 100 | 100 |

Während der Standzeit der Katalysatorlösungen änderte sich die Farbe des Grubbs-(II)-Katalysators von violett nach orange-braun. Als Zersetzungsprodukt des Grubbs-(II)-Katalysators bildete sich Benzaldehyd. Die Lösung des Katalysators aus B3 war anfangs orange. Während der Standzeit der Lösung wurde die Farbe kaum erkennbar dunkler. Zersetzungsprodukte des Katalysators aus B3 waren mittels NMR nicht detektierbar.

In **Deuterobenzol** wurden folgende zeitlichen Abhängigkeiten der relativen Konzentrationen bestimmt:

| **Standzeit [h]** | 0 | 1 | 2 | 3 | 4 |
|---|---|---|---|---|---|
| **Grubbs-(II)-Katalysator (nicht erfindungsgemäß)** | 100 | 83,6 | 73,6 | 66,8 | 59,9 |
| **Katalysator aus Beispiel B3** | 100 | 100 | 100 | 100 | 100 |

Während der Standzeit der Katalysatorlösungen änderte sich die Farbe des Grubbs-(II)-Katalysators von violett nach dunkelbraun. Als Zersetzungsprodukt des Grubbs-(II)-Katalysators bildete sich Benzaldehyd. Die Lösung des Katalysators aus B3 war anfangs hellgrün. Während der Standzeit der Lösung des Katalysators aus B3 war keine Farbänderung zu beobachten. Zersetzungsprodukte des Katalysators aus B3 waren mittels NMR nicht detektierbar.

Die Untersuchungen zeigen, dass der Katalysator aus **B3** [Dichloro(1,3-dimesityldihydroimidazolyliden)(tricyclohexyl-phosphoniocarben)ruthenium] [tetrakis(3,5-trifluoromethylphenyl) borat] in sauerstoffhaltigen Lösungsmitteln eine signifikant bessere Stabilität besitzt als entsprechende Lösungen des Grubbs-(II)-Katalysators.

## III. Verwendung der Ru-Katalvsatoren aus den Beispielen B2, B3 und B8 für den Metathese-Abbau von Nitrilkautschuken

Die nachfolgend beschriebenen Abbaureaktionen wurden unter Einsatz des Nitrilkautschuks Perbunan® NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 35 Gew.% |
| Mooneywert (ML 1+4 @100˚C): | 34 Mooneyeinheiten |
| Restfeuchte: | 1,8 Gew.% |
| $M_w$: | 240.000 g/mol |
| $M_n$: | 100.000 g/mol |
| PDI ($M_w$ / $M_n$): | 2,4 |

Nachfolgend wird dieser Nitrilkautschuk mit NBR abgekürzt.

Für den Metatheseabbau wurden jeweils 293,3 g Chlorbenzol (nachfolgend "MCB" genannt/ Firma Aldrich) verwendet, das vor Einsatz destilliert und bei Raumtemperatur durch Durchleiten von Luft mit Sauerstoff gesättigt wurde. Hierin wurden 40 g NBR während eines Zeitraums von 10 h bei Raumtemperatur gelöst. Zu den NBR-haltigen Lösung wurden jeweils 0,8 g (2 phr) 1-Hexen gegeben und zur Homogenisierung 30 min gerührt.

Für die Durchführung der Metathesereaktionen wurden die in den nachfolgenden Tabellen angegebenen Mengen der zuvor beschriebenen Ru-Katalysatoren aus den Beispielen B2, B3 und B7 eingesetzt. Die Ru-Katalysatoren wurden hierfür jeweils in 20 g MCB bei Raumtemperatur ohne Verwendung von Schutzgas gelöst. Vor dem Einsatz von MCB für die Herstellung der Katalysatorlösungen wurde jeweils bei Raumtemperatur Luft durchgeleitet, um das Lösungsmittel mit Sauerstoff zu sättigen. Bei den Versuchsserien 1) und 2) erfolgte die Zugabe der Katalysatorlösungen zu den NBR-Lösungen in MCB sofort nach der Herstellung der Katalysatorlösungen. Bei der Versuchsserie 3) wurde die Katalysatorlösung vor der Verwendung 4 Tage bei 40˚C gelagert.

Die Reaktionstemperaturen bei der Durchführung der Metathesereaktionen sind in den nachfolgenden Tabellen vermerkt. Nach den in den Tabellen angegebenen Reaktionszeiten wurden von den Reaktionslösungen jeweils ca. 5 ml Lösung entnommen und zur Abstoppung unmittelbar mit ca. 0,2 ml Ethylvinylether versetzt und anschließend mit 5 ml DMAc (*N,N*-Dimethylacetamid) der Firma Aldrich verdünnt. Von diesen Lösungen wurden jeweils 2 ml in ein GPC-Gläschen gegeben und mit DMAc auf 3 ml verdünnt. Vor Durchführung der GPC-Analyse wurden die Lösungen jeweils mittels eines 0,2μm-Spritzenfilters aus Teflon (Chromafil PTFE 0,2 μm; Firma Machery-Nagel) filtriert. Im Anschluss daran erfolgte die GPC-Analyse mit einem Gerät der Firma Fa. Waters (Mod. 510). Für die Analytik.wurde eine Kombination von 4 Säulen der Polymer Laboratories verwendet: 1) PLgel 5μm Mixed-C, 300 x 7,5mm, 2) PLgel 5μm Mixed-C, 300 x 7,5mm, 3) PLgel 3μm Mixed-E, 300 x 7,5mm, und 4) PLgel 3μm Mixed-E, 300 x 7,5mm.

Die Kalibrierung der GPC-Säulen erfolgte mit linearem Poly(methylmethacrylat) der Firma Polymer Standards Services. Als Detektor wurde ein RI-Detektor der Firma Waters (Waters 410) verwendet. Die Analytik wurde mit einer Flussrate von 0,5 mL/min durchgeführt, wobei als Eluent DMAc verwendet wurde. Die Auswertung der GPC-Kurven erfolgte mit Software der Firma Millenium.

Mittels GPC-Analyse wurden folgende charakteristischen Kenngrößen sowohl für den NBR-Originalkautschuk (vor dem Abbau) als auch für die abgebauten Produkte bestimmt:

$M_w$ [kg/mol]: Gewichtsmittel der Molmasse
$M_n$ [kg/mol]: Zahlenmittel der Molmasse
PDI: Breite der Molmassenverteilung ($M_w/M_n$)

Mit den zuvor beschriebenen Ru-Verbindungen B2, B3 und B8 wurden drei Versuchsserien durchgeführt, in denen gezeigt wird, dass diese Ru-Verbindungen für die Katalyse des NBR-Abbaus geeignet sind:

**Versuchsserie 1)**

**NBR-Metathese unter Verwendung von [Dichloro(1,3-dimesityldihydroimidazolyliden) (tricyclohexylphosphoniocarben)ruthenium] tetrafluoroborat (Ru-Katalysator (2) aus B2)**

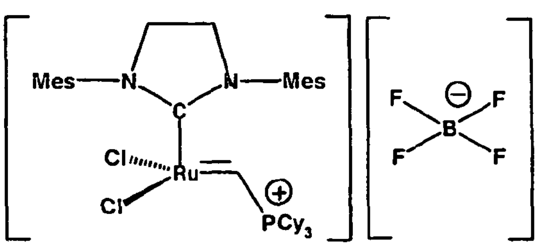

(2)

**Tabellen 1a und 1b:**

| NBR | Ru-Katalysator (2) aus B2 | | 1-Hexen | | Temperatur |
|---|---|---|---|---|---|
| [g] | [mg] | [phr] | [g] | [phr] | [˚C] |
| 40 | 120 | 0,3 | 0,8 | 2,0 | 1) 200 min bei 23˚C<br>2) 425 min bei 55˚C |

| Analytische Daten | Reaktionszeit bei 55˚C [min.] | | | | |
|---|---|---|---|---|---|
| | **0** | **30** | **60** | **185** | **425** |
| **$M_w$ [kg/mol]** | 240 | 181 | 195 | 192 | 58 |
| **$M_n$ [kg/mol]** | 100 | 79 | 83 | 82 | 22 |
| **PDI** | 2,4 | 2,3 | 2,3 | 2,3 | 2,6 |

In der Versuchsserie 1) wird gezeigt, dass der Ru-Katalysator (2) aus Beispiel B2 in einer mit Sauerstoff gesättigten MCB-Lösung den Metatheseabbau von NBR bei einer Reaktionstemperatur von 55 ˚C katalysiert. Der in der Versuchsserie 1) erhaltene abgebaute NBR ist gelfrei.

**Versuchsserie 2)**

**NBR-Metathese unter Verwendung von [Dichloro(1,3-dimesityldihydro-imidazolyliden) (tricyclohexylphosphoniocarben)ruthenium] [tetrakis(3,5-trifluoromethylphenyl)borat] (Ru-Katalysator (3) aus B3)**

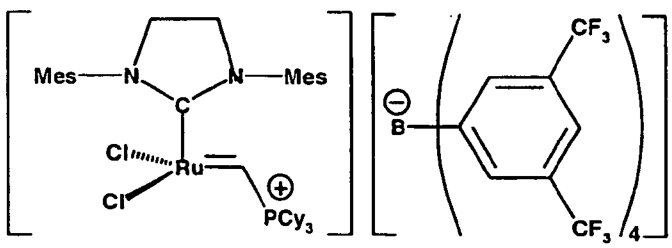

**(3)**

**Tabellen 2a und 2b:**

| NBR | Ru-Katalysator (3) aus B3 | | 1-Hexen | | Temperatur |
|---|---|---|---|---|---|
| [g] | [mg] | [phr] | [g] | [phr] | [˚C] |
| 40 | 120 | 0,3 | 0,8 | 2,0 | 55 |

| Analytische Daten | Reaktionszeit bei 55˚C [min.] | | | | |
|---|---|---|---|---|---|
| | **0** | **30** | **60** | **185** | **425** |
| **$M_w$ [kg/mol]** | 240 | 98 | 81 | 54 | 48 |
| **$M_n$ [kg/mol]** | 100 | 48 | 42 | 31 | 26 |
| **PDI** | 2,4 | 2,0 | 1,9 | 1,7 | 1,8 |

In der Versuchsserie 2) wird gezeigt, dass der Ru-Katalysator (3) aus B3 in einer mit Sauerstoff gesättigten MCB-Lösung bei 55˚C die Metathese von NBR katalysiert. Der in der Versuchsserie 2) erhaltene abgebaute NBR ist gelfrei.

**Versuchsserie 3)**

**NBR-Metathese unter Verwendung von [Dichloro(trans-4,5-dibutyl-1,3-dimesityldihydroimidazolyliden)(tricyclohexylphosphoniocarben)ruthenium] tetrafluoroborat (Ru-Katalysator (6) aus B8)**

Bei dieser Versuchsserie wurde die sauerstoffhaltige MCB-Lösung des Ru-Katalysators (6) aus B8 4 Tage vor Verwendung bei 40°C gelagert.

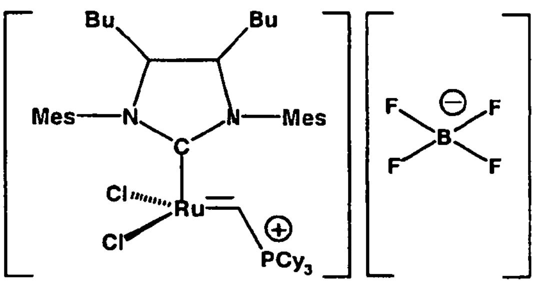

(6)

**Tabellen 3a und 3b:**

| NBR | Ru-Katalysator (6) aus B8 | | 1-Hexen | | Temperatur |
|---|---|---|---|---|---|
| [g] | [mg] | [phr] | [g] | [phr] | [°C] |
| 40 | 22,9 | 0,057 | 0,8 | 2,0 | 23°C |

| Analytische Daten | Reaktionszeit bei 23°C [min.] | | | | |
|---|---|---|---|---|---|
| | 0 | 30 | 60 | 185 | 425 |
| $M_w$[kg/mol] | 240 | - | 178 | 159 | 161 |
| $M_n$ [kg/mol] | 100 | - | 66 | 67 | 70 |
| PDI | 2,4 | - | 2,7 | 2,4 | 2,3 |

In der Versuchsserie 3) wird gezeigt, dass der Ru-Katalysator (6) aus B8 in einer mit Sauerstoff gesättigten MCB-Lösung auch nach Lagerung der Katalysatorlösung bei 40°C über einen Zeitraum von 4 Tagen die Metathese von NBR bei 23°C katalysiert. Der in der Versuchsserie 3) erhaltene abgebaute NBR ist gelfrei.

**Patentansprüche**

1. Verfahren zum Metathese-Abbau von Nitrilkautschuken, wobei man einen Nitrilkautschuk einer Metathese-Reaktion in Gegenwart eines Katalysators der allgemeinen Formel (I) bei einer Temperatur im Bereich von 50 bis 150°C unterwirft,

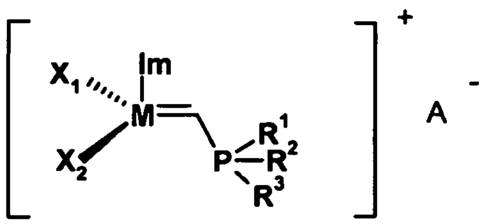

(I)

wobei

M Ruthenium oder Osmium bedeutet,
$X^1$ und $X^2$ gleich oder verschieden sein können und anionische Liganden darstellen,
$R^1$, $R^2$ und $R^3$ gleich oder verschieden sind und organische Reste darstellen,
Im einen gegebenenfalls substituierten Imidazolidinrest darstellt und
A ein Anion darstellt.

**2.** Verfahren gemäß Anspruch 1, wobei ein Katalysator der allgemeinen Formel (I) eingesetzt wird, bei dem $X^1$ und $X^2$ gleich oder verschieden und Wasserstoff, Halogen, Pseudohalogen, $C_1$-$C_{20}$-Alkyl, Aryl, $C_1$-$C_{20}$-Alkoxy, Aryloxy, $C_3$-$C_{20}$-Alkyldiketonat, Aryldiketonat, $C_1$-$C_{20}$-Carboxylat, Arylsulfonat, $C_1$-$C_{20}$-Alkylsulfonat, $C_1$-$C_{20}$-Alkylthiol, Arylthiol, $C_1$-$C_{20}$-Alkylsulfonyl oder $C_1$-$C_{20}$-Alkylsulfinyl-Reste darstellen.

**3.** Verfahren gemäß Anspruch 1 oder 2, wobei ein Katalysator der allgemeinen Formel (I) eingesetzt wird, bei dem die Reste $R^1$, $R^2$ und $R^3$ im Rest $P(R^1R^2R^3)$ der allgemeinen Formel (I) gleich oder verschieden sind und geradkettiges oder verzweigtes $C_1$-$C_{30}$-Alkyl, $C_5$-$C_{30}$-Cylcoalkyl oder Aryl darstellen, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**4.** Verfahren gemäß einem oder mehreren der Ansprüche 1 bis 3 , wobei ein Katalysator der allgemeinen Formel (I) eingesetzt wird, bei dem der Rest $P(R^1R^2R^3)$ in der allgemeinen Formel (I) Triphenylphosphin, Tricyclohexylphoshin, Tricyclopentylphosphin, Triisopropylphosphin, Tri (o-tolyl)-phosphin, Tri (o-xylyl) phosphin oder Trimesitylphosphin bedeutet.

**5.** Verfahren gemäß einem oder mehreren der Ansprüche 1 bis 4, wobei ein Katalysator eingesetzt wird, bei dem der Imidazolidinrest (Im) in der allgemeinen Formel (I) eine Struktur der allgemeinen Formeln (IIa) oder (IIb) aufweist,

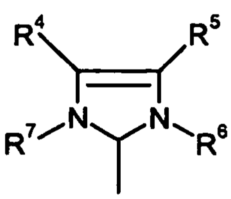

(IIa)

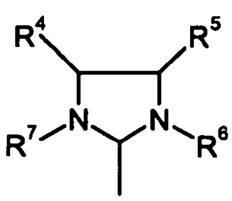

(IIb)

worin

$R^4$, $R^5$, $R^6$, $R^7$ gleich oder verschieden sein können und Wasserstoff, geradkettiges oder verzweigtes, cyclisches oder acyclisches $C_1$-$C_{20}$-Alkyl, $C_2$-$C_{20}$ Alkenyl, $C_2$-$C_{20}$- Alkinyl, Aryl, $C_1$-$C_{20}$-Carboxylat, $C_1$-$C_{20}$-Alkoxy, $C_2$-$C_{20}$-Alkenyloxy, $C_2$-$C_{20}$- Alkinyloxy, Aryloxy, $C_2$-$C_{20}$-Alkoxycarbonyl, $C_1$-$C_{20}$-Alkylthio, Arylthio, $C_1$-$C_{20}$- Alkylsulfonyl, $C_1$-$C_{20}$-Alkylsulfonat, $C_6$-$C_{20}$-Arylsulfonat und $C_1$-$C_{20}$-Alkylsulfinyl bedeuten.

**6.** Verfahren gemäß einem oder mehreren der Ansprüche 1 bis 5, wobei ein Katalysator der allgemeinen Formel (I)

eingesetzt wird, bei dem der Imidazolidinrest (Im) in der allgemeinen Formel (I) eine Struktur der allgemeinen Formeln (IIIa-f) aufweist

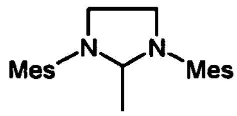
(IIIa)

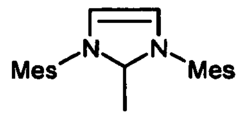
(IIIb)

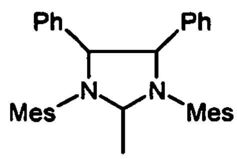
(IIIc)

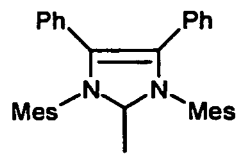
(IIId)

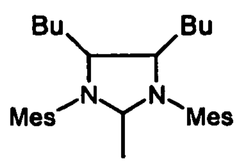
(IIIe)

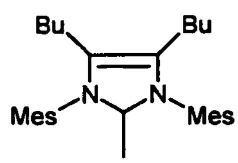
(IIIf)

7. Verfahren gemäß einem oder mehreren der Ansprüche 1 bis 6, wobei ein Katalysator der allgemeinen Formel (I) eingesetzt wird, bei dem es sich bei A in der allgemeinen Formel (I) um Nitrat, Nitrit, Carbonat, Sulfit, Fluorsulfonat, Trifluormethansulfonat (Triflat), ein Halogenid, ein Pseudohalogenid, Carboxylat, Sulfonat, Sulfat, Phosphonat, Phosphat, ein komplexes Anion oder ein nicht koordinierendes Anion handelt.

8. Verfahren gemäß einem oder mehreren der Ansprüche 1 bis 7 ,wobei ein Katalysator der nachfolgenden Strukturen (IVa-c) eingesetzt wird

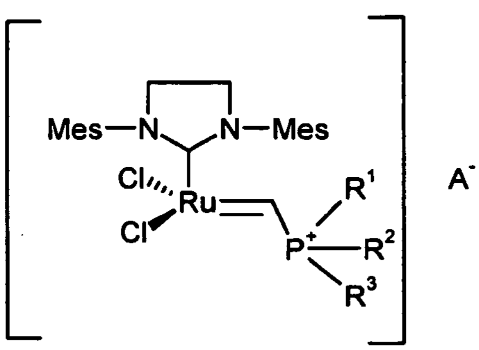
(IVa)

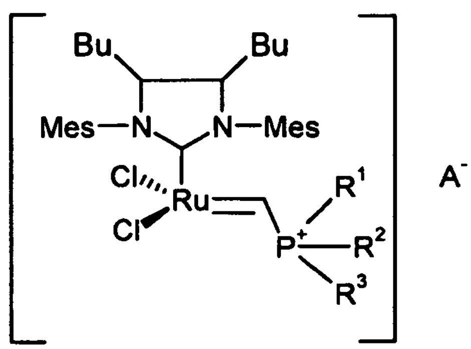
(IVb)

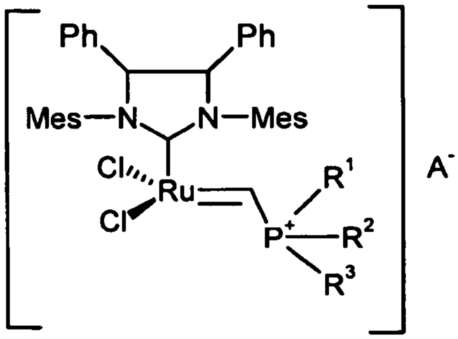

(IVc)

wobei

$R^1$, $R^2$, $R^3$ geradkettiges oder verzweigtes $C_1$-$C_{30}$-Alkyl, $C_5$-$C_{10}$ Cycloalkyl oder Aryl darstellen, wobei die $C_1$-$C_{30}$-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können und
A die für die allgemeine Formel (I) genannten Bedeutungen besitzt.

**9.** Verfahren gemäß einem oder mehreren der Ansprüche 1 bis 8, wobei ein Katalysator der allgemeinen Formel (I) eingesetzt wird, bei dem
der Rest $P(R^1R^2R^3)$ Triisopropylphosphin, Triphenylphosphin, Tricyclohexylphoshin, Tricyclopentylphosphin, Tri (o-tolyl)phosphin, Tri (o-xylyl)phosphin oder Trimesitylphosphin bedeutet
und

A Bromid, Versatat, Sebacat, Trifluoracetat, Nitrat, Tetrafluoroborat, Tetrakis(3,5-trifluoromethylphenyl)borat, Tetrakis[pentafluorophenyl]borat oder (Bis(trispentafluorphenyl)bor)cyanid darstellt.

**10.** Verfahren gemäß einem oder mehreren der Ansprüche 1-9, wobei die zur Metathese eingesetzten Nitrilkautschuke eine Mooney-Viskosität (ML 1+4 @100°C) im Bereich von 30 bis 70, bevorzugt von 30 bis 50 und eine Polydispersität PDI = $M_w/M_n$, wobei $M_n$ das Zahlenmittel und $M_w$ das Gewichtsmittel des Molekulargewichts darstellt, im Bereich von 2,0 - 6,0 und bevorzugt im Bereich von 2,0 - 4,0 besitzen.

**11.** Verfahren zur Herstellung von hydrierten Nitrilkautschuken, **dadurch gekennzeichnet, dass** man anschließend an das Verfahren gemäß einem oder mehreren der Ansprüche 1-10 eine Hydrierung des durch die Metathese abgebauten Nitrilkautschuks durchführt.

## Claims

**1.** Process for the degradation of nitrile rubbers by metathesis, in which the nitrile rubber is subjected to a metathesis reaction at a temperature in the range from 50 to 150°C in the presence of a catalyst of the general formula (I),

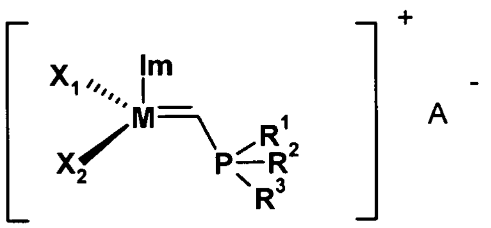

(I)

where

M is ruthenium or osmium,
$X^1$ and $X^2$ can be identical or different and are each anionic ligands,
$R^1$, $R^2$ and $R^3$ are identical or different and are each organic radicals,
Im is a substituted or unsubstituted imidazolidine radical and
A is an anion.

**2.** Process according to Claim 1, wherein a catalyst of the general formula (I) in which $X^1$ and $X^2$ are identical or different and are each hydrogen, halogen, pseudohalogen, $C_1$-$C_{20}$-alkyl, aryl, $C_1$-$C_{20}$-alkoxy, aryloxy, $C_3$-$C_{20}$-alkyldiketonate, aryldiketonate, $C_1$-$C_{20}$-carboxylate, arylsulphonate, $C_1$-$C_{20}$-alkylsulphonate, $C_1$-$C_{20}$-alkylthiol, arylthiol, $C_1$-$C_{20}$-alkylsulphonyl or $C_1$-$C_{20}$-alkylsulphinyl radical is used.

**3.** Process according to Claim 1 or 2, wherein a catalyst of the general formula (I) in which the radicals $R^1$, $R^2$ and $R^3$ in the radical $P(R^1R^2R^3)$ of the general formula (I) are identical or different and are each straight-chain or branched $C_1$-$C_{30}$-alkyl, $C_5$-$C_{30}$-cycloalkyl or aryl, where the $C_1$-$C_{30}$-alkyl radicals may be interrupted by one or more double or triple bonds or else one or more heteroatoms, preferably oxygen or nitrogen, is used.

**4.** Process according to one or more of Claims 1 to 3, wherein a catalyst of the general formula (I) in which $P(R^1R^2R^3)$ in the general formula (I) is triphenylphosphine, tricyclohexylphosphine, tricyclopentylphosphine, triisopropylphosphine, tri(o-tolyl)phosphine, tri (o-xylyl)phosphine or trimesitylphosphine is used.

**5.** Process according to one or more of Claims 1 to 4, wherein a catalyst in which the imidazolidine radical (Im) in the general formula (I) has a structure of the general formula (IIa) or (IIb),

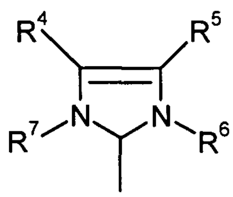

(IIa)

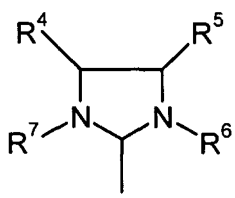

(IIb)

where

$R^4$, $R^5$, $R^6$, $R^7$ can be identical or different and are each hydrogen, straight-chain or branched, cyclic or acyclic $C_1$-$C_{20}$-alkyl, $C_2$-$C_{20}$-alkenyl, $C_2$-$C_{20}$-alkynyl, aryl, $C_1$-$C_{20}$-carboxylate, $C_1$-$C_{20}$-alkoxy, $C_2$-$C_{20}$-alkenyloxy, $C_2$-$C_{20}$- alkynyloxy, aryloxy, $C_2$-$C_{20}$-alkoxycarbonyl, $C_1$-$C_{20}$-alkylthio, arylthio, $C_1$- $C_{20}$-alkylsulphonyl, $C_1$-$C_{20}$-alkylsulphonate, $C_6$-$C_{20}$-arylsulphonate or $C_1$- $C_{20}$-alkylsulphinyl,

is used.

**6.** Process according to one or more of Claims 1 to 5, wherein a catalyst of the general formula (I) in which the imidazolidine radical (Im) in the general formula (I) has a structure from the general formulae (IIIa-f)

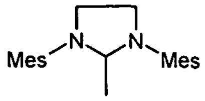

(IIIa)

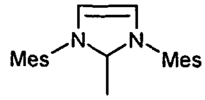

(IIIb)

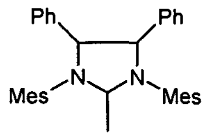

(IIIc)

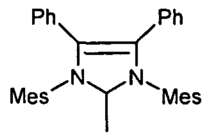

(IIId)

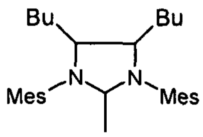

(IIIe)

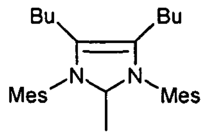

(IIIf)

is used.

7. Process according to one or more of Claims 1 to 6, wherein a catalyst of the general formula (I) in which A in the general formula (I) is nitrate, nitrite, carbonate, sulphite, fluorosulphonate, trifluoromethanesulphonate (triflate), a halide, a pseudohalide, carboxylate, sulphonate, sulphate, phosphonate, phosphate, a complex anion or a noncoordinating anion is used.

8. Process according to one or more of Claims 1 to 7, wherein a catalyst having one of the following structures (IVa-c)

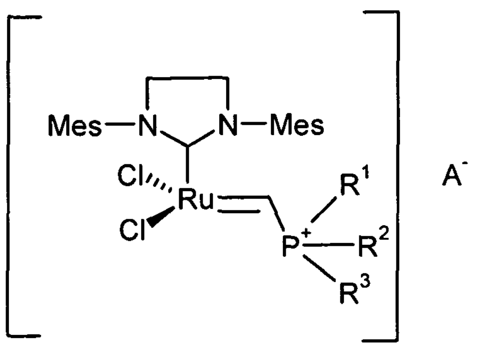

(IVa)

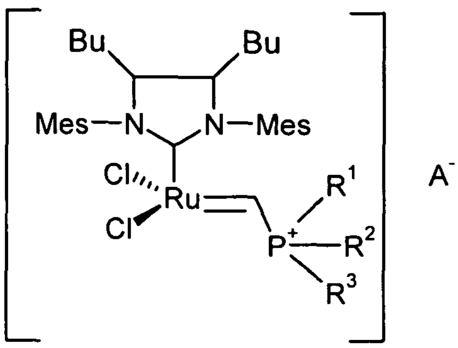

(IVb)

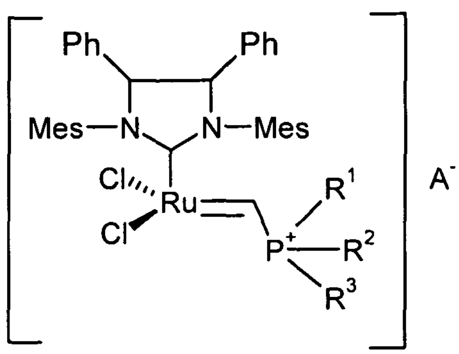

(IVc)

where

$R^1$, $R^2$, R3 are each straight-chain or branched $C_1$-$C_{30}$-alkyl, $C_5$-$C_{10}$-cycloalkyl or aryl, where the $C_1$-$C_{30}$-alkyl radicals may be interrupted by one or more double or triple bonds or else one or more heteroatoms, preferably oxygen or nitrogen, and
A is as defined for the general formula (I)

is used.

**9.** Process according to one or more of Claims 1 to 8, wherein a catalyst of the general formula (I) in which the radical $P(R^1R^2R^3)$ is triisopropylphosphine, triphenylphosphine, tricyclohexylphosphine, tricyclopentylphosphine, tri(o-tolyl)phosphine, tri(o-xylyl)phosphine or trimesitylphosphine
and

A is bromide, versatate, sebacate, trifluoroacetate, nitrate, tetrafluoro- borate, tetrakis(3,5-trifluoromethylphenyl) borate, tetrakis[pentafluorophenyl]borate or (bis(trispentafluorophenyl)boro)cyanide,

is used.

**10.** Process according to one or more of Claims 1-9, wherein the nitrile rubbers used for the metathesis have a Mooney viscosity (ML 1+4 @100°C) in the range from 30 to 70, preferably from 30 to 50, and a polydispersity PDI = $M_w/M_n$, where $M_n$ is the number average molecular weight and $M_w$ is the weight average molecular weight, in the range 2.0 - 6.0 and preferably in the range 2.0 - 4.0.

**11.** Process for producing hydrogenated nitrile rubbers, **characterized in that** the process according to one or more of Claims 1-10 is followed by a hydrogenation of the nitrile rubber which has been degraded by the metathesis.

## Revendications

**1.** Procédé de décomposition par métathèse de caoutchoucs nitriles, dans lequel un caoutchouc nitrile est soumis à une réaction de métathèse en présence d'un catalyseur de formule générale (I) à une température dans la plage allant de 50 à 150 °C

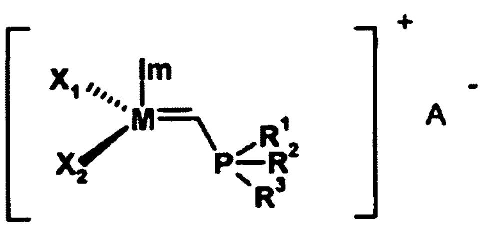

(I)

M signifiant ruthénium ou osmium
$X^1$ et $X^2$ pouvant être identiques ou différents et représentant des ligands anioniques,
$R^1$, $R^2$ et $R^3$ étant identiques ou différents et représentant des radicaux organiques,
Im représentant un radical imidazolidine éventuellement substitué, et
A représentant un anion.

**2.** Procédé selon la revendication 1, dans lequel un catalyseur de formule générale (I) est utilisé, $X^1$ et $X^2$ étant identiques ou différents et représentant des radicaux hydrogène, halogène, pseudohalogène, alkyle en $C_1$-$C_{20}$, aryle, alcoxy en $C_1$-$C_{20}$, aryloxy, dicétonate d'alkyle en $C_3$-$C_{20}$, dicétonate d'aryle, carboxylate en $C_1$-$C_{20}$, sulfonate d'aryle, sulfonate d'alkyle en $C_1$-$C_{20}$,
alkylthiol en $C_1$-$C_{20}$, arylthiol, alkylsulfonyle en $C_1$-$C_{20}$ ou alkylsulfinyle en $C_1$-$C_{20}$.

**3.** Procédé selon la revendication 1 ou 2, dans lequel un catalyseur de formule générale (I) est utilisé, les radicaux $R^1$, $R^2$ et $R^3$ dans le radical P $(R^1R^2R^3)$ de la formule générale (I) étant identiques ou différents et représentant un

alkyle en $C_1$-$C_{30}$ linéaire ou ramifié, un cycloalkyle en $C_5$-$C_{30}$ ou un aryle, les radicaux alkyle en $C_1$-$C_{30}$ pouvant éventuellement être interrompus par une ou plusieurs liaisons doubles ou triples ou également un ou plusieurs hétéroatomes, de préférence l'oxygène ou l'azote.

**4.** Procédé selon une ou plusieurs des revendications 1 à 3, dans lequel un catalyseur de formule générale (I) est utilisé, le radical $P(R^1R^2R^3)$ dans la formule générale (I) signifiant triphénylphosphine, tricyclohexylphosphine, tricyclopentylphosphine, triisopropylphosphine, tri(o-tolyl)phosphine, tri(o-xylyle)phosphine ou trimésitylphosphine.

**5.** Procédé selon une ou plusieurs des revendications 1 à 4, dans lequel un catalyseur est utilisé, le radical imidazolidine (Im) dans la formule générale (I) ayant une structure de formule générale (IIa) ou (IIb)

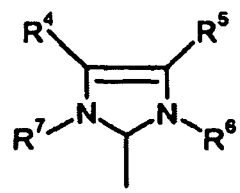

**(IIa)**

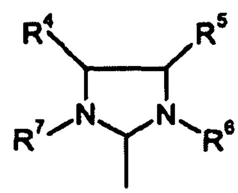

**(IIb)**

dans lesquelles
$R^4$, $R^5$, $R^6$, $R^7$ peuvent être identiques ou différents et signifient l'hydrogène, un alkyle en $C_1$-$C_{20}$ linéaire ou ramifié, cyclique ou acyclique, un alcényle en $C_2$-$C_{20}$, un alcynyle en $C_2$-$C_{20}$, un aryle, un carboxylate en $C_1$-$C_{20}$, un alcoxy en $C_1$-$C_{20}$, un alcényloxy en $C_2$-$C_{20}$, un alcynyloxy en $C_2$-$C_{20}$, un aryloxy, un alcoxycarbonyle en $C_2$-$C_{20}$, un alkylthio en $C_1$-$C_{20}$, un arylthio, un alkylsulfonyle en $C_1$-$C_{20}$, un sulfonate d'alkyle en $C_1$-$C_{20}$, un sulfonate d'aryle en $C_6$-$C_{20}$ et un alkylsulfinyle en $C_1$-$C_{20}$.

**6.** Procédé selon une ou plusieurs des revendications 1 à 5, dans lequel un catalyseur de formule générale (I) est utilisé, le radical imidazolidine (Im) dans la formule générale (I) présentant une structure des formules générales (IIIa à f)

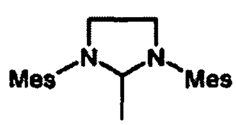

**(IIIa)**

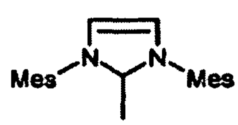

**(IIIb)**

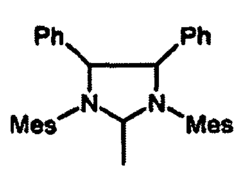

**(IIIc)**

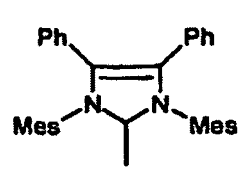

**(IIId)**

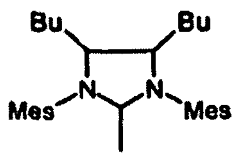

(IIIe)

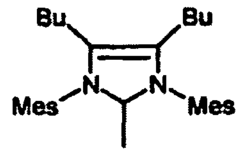

(IIIf)

7. Procédé selon une ou plusieurs des revendications 1 à 6, dans lequel un catalyseur de formule générale (I) est utilisé, A dans la formule générale (I) étant un nitrate, un nitrite, un carbonate, un sulfite, un fluorosulfonate, un sulfonate de trifluorométhane (triflate), un halogénure, un pseudohalogénure, un carboxylate, un sulfonate, un sulfate, un phosphonate, un phosphate, un anion complexe ou un anion non coordinant.

8. Procédé selon une ou plusieurs des revendications 1 à 7, dans lequel un catalyseur des structures (IVa à c) suivantes est utilisé

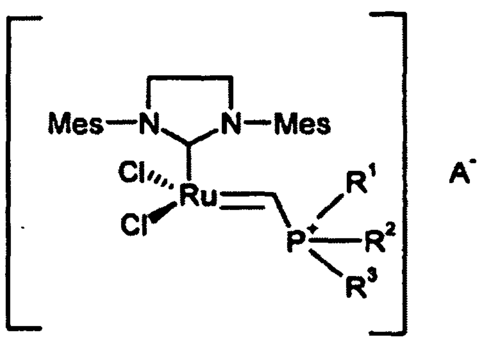

(IVa)

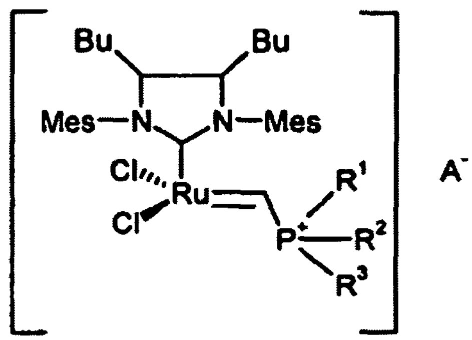

(IVb)

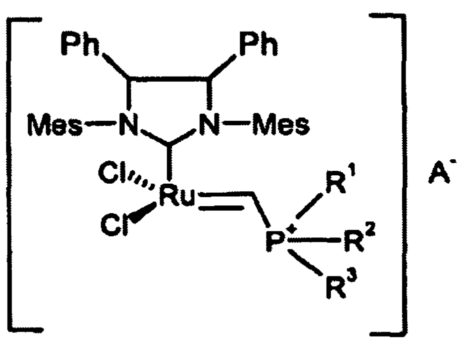

(IVc)

dans lesquelles

$R^1$, $R^2$, $R^3$ représentent un alkyle en $C_1$-$C_{30}$ linéaire ou ramifié, un cycloalkyle en $C_5$-$C_{10}$ ou un aryle, les radicaux alkyle en $C_1$-$C_{30}$ pouvant éventuellement être interrompus par une ou plusieurs liaisons doubles ou triples ou également un ou plusieurs hétéroatomes, de préférence l'oxygène ou l'azote, et
A a les significations données pour la formule générale (I).

**9.** Procédé selon une ou plusieurs des revendications 1 à 8, dans lequel un catalyseur de formule générale (I) est utilisé, le radical P ($R^1R^2R^3$) signifiant triisopropylphosphine, triphénylphosphine, tricyclohexylphosphine, tricyclopentylphosphine, tri(o-tolyl)phosphine, tri(o-xylyl)phosphine ou trimésitylphosphine,
et
A représentant bromure, versatate, sébacate, trifluoroacétate, nitrate, tétrafluoroborate, borate de tétrakis(3,5-trifluorométhylphényle), borate de tétrakis[pentafluorophényle] ou cyanure de (bis(trispentafluorophényl)bore).

**10.** Procédé selon une ou plusieurs des revendications 1 à 9, dans lequel les caoutchoucs nitriles utilisés pour la métathèse présentent une viscosité de Mooney (ML 1+4@100 ˚C) dans la plage allant de 30 à 70, de préférence de 30 à 50, et une polydispersité PDI = $M_w/M_n$, $M_n$ représentant la moyenne en nombre et $M_w$ la moyenne en poids du poids moléculaire, dans la plage allant de 2,0 à 6,0, et de préférence dans la plage allant de 2,0 à 4,0.

**11.** Procédé de fabrication de caoutchoucs nitriles hydrogénés, **caractérisé en ce qu'**une hydrogénation du caoutchouc nitrile décomposé par la métathèse est réalisée après le procédé selon une ou plusieurs des revendications 1 à 10.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 02100941 A
- WO 02100905 A
- WO 9604289 A
- WO 9706185 A
- WO 03002613 A
- US 20040110888 A1
- US 3700637 A
- DE 2539132 A
- EP 0134023 A
- DE 3541689 A
- DE 3540918 A
- EP 0298386 A
- DE 3529252 A
- DE 3433392 A
- US 4464515 A
- US 4503196 A
- EP 0471250 A
- US 4631315 A
- US 6683136 A


### In der Beschreibung aufgeführte Nicht-Patentliteratur


- **HOUBEN-WEYL.** Methoden der Organischen Chemie. Georg Thieme Verlag, 1961, vol. 14/1